# EUROPEAN PATENT APPLICATION

(11) **EP 4 228 356 A1**
(43) Date of publication of application: **16.08.2023**
(21) Application number: 20959266.6
(22) Date of filing: 30.10.2020
(51) Int. Cl.: H04W 72/04

(54) **COMMUNICATION METHOD AND APPARATUS, AND COMPUTER-READABLE STORAGE MEDIUM**

(71) Applicant: Huawei Technologies Co., Ltd., Shenzhen, Guangdong 518129 (CN)
(72) Inventor: XUAN, Yidi, Shenzhen, Guangdong 518129 (CN); XIE, Xinqian, Shenzhen, Guangdong 518129 (CN); GUO, Zhiheng, Shenzhen, Guangdong 518129 (CN)
(74) Representative: Gill Jennings & Every LLP
(86) International application number: PCT/CN2020/125546
(87) International publication number: WO 2022/088105

(57) **Abstract**

This application provides a communication method and apparatus and a computer-readable storage medium. The method includes: receiving first indication information from a network device, where the first indication information indicates a first uplink frequency domain resource, a second uplink frequency domain resource, and a first downlink frequency domain resource on a carrier in a first time period, and the first time period includes one or more slots; and determining the first uplink frequency domain resource, the second uplink frequency domain resource, and the first downlink frequency domain resource on the carrier based on the first indication information. According to the technical solutions provided in this application, a terminal device can determine uplink and downlink resources on a same carrier at the same time in a full-duplex frequency division duplex scenario, so that the terminal device can perform uplink and downlink communication on the same carrier at the same time in the full-duplex frequency division duplex scenario.

## Description

### TECHNICAL FIELD

This application relates to the field of wireless communication technologies, and specifically, to a communication method and apparatus and a computer-readable storage medium.

### BACKGROUND

Currently, there are a plurality of duplex modes in a wireless communication system, for example, time division duplex (time division duplex, TDD) and full-duplex frequency division duplex (full-duplex frequency division duplex, full-duplex FDD). In a TDD scenario, to improve flexibility, uplink and downlink resources may be configured in slots and symbols. In a full-duplex FDD scenario, if uplink and downlink resources are configured in slots and symbols, a requirement for configuring uplink and downlink resources on a same carrier at the same time cannot be met, that is, a requirement for performing uplink and downlink communication on a same carrier at the same time cannot be met.

### SUMMARY

This application provides a communication method and apparatus and a computer-readable storage medium, so that a terminal device can perform uplink and downlink communication on a same carrier at the same time in a full-duplex FDD scenario.

According to a first aspect, this application provides a communication method. The method may be applied to a terminal device, or may be applied to a module (for example, a chip) in the terminal device. The following provides descriptions by using an example in which the method is applied to the terminal device. The communication method may be used to determine uplink and downlink resources, and may include: receiving first indication information from a network device, where the first indication information indicates a first uplink frequency domain resource, a second uplink frequency domain resource, and a first downlink frequency domain resource on a carrier in a first time period, and the first time period includes one or more slots, where a frequency of the first uplink frequency domain resource is lower than a frequency of the first downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and determining the first uplink frequency domain resource, the second uplink frequency domain resource, and the first downlink frequency domain resource on the carrier based on the first indication information.

In the solution provided in this application, the terminal device may receive the first indication information from the network device, and the first indication information may indicate the first uplink frequency domain resource, the second uplink frequency domain resource, and the first downlink frequency domain resource on the carrier in the first time period to the terminal device. After receiving the first indication information, the terminal device may determine the first uplink frequency domain resource, the second uplink frequency domain resource, and the first downlink frequency domain resource on the carrier based on the first indication information. In this way, the terminal device can determine uplink and downlink resources on a same carrier at the same time in a full-duplex FDD scenario, so that the terminal device can perform uplink and downlink communication on the same carrier at the same time in the full-duplex FDD scenario.

It should be understood that the first indication information may indicate a frequency domain resource configuration of a carrier in a time period, a frequency domain of the carrier may be preset, and the first time period may include one or more slots. The first uplink frequency domain resource may include a frequency domain resource block with a lowest frequency or a smallest sequence number on the carrier, and the second uplink frequency domain resource may include a frequency domain resource block with a highest frequency or a largest sequence number on the carrier.

In a possible implementation, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In the solution provided in this application, a maximum frequency of a frequency domain resource may be understood as a frequency corresponding to a subcarrier with a highest frequency in the frequency domain resource. A minimum frequency of a frequency domain resource may be understood as a frequency corresponding to a subcarrier with a lowest frequency in the frequency domain resource. Specifically, the maximum frequency of the first uplink frequency domain resource may be understood as a frequency corresponding to a subcarrier with a highest frequency in the first uplink frequency domain resource, the minimum frequency of the first downlink frequency domain resource may be understood as a frequency corresponding to a subcarrier with a lowest frequency in the first downlink frequency domain resource, the maximum frequency of the first downlink frequency domain resource may be understood as a frequency corresponding to a subcarrier with a highest frequency in the first downlink frequency domain resource, and the minimum frequency of the second uplink frequency domain resource may be understood as a frequency corresponding to a subcarrier with a lowest frequency in the second uplink frequency domain resource. A subcarrier spacing used for measurement may be a predefined subcarrier spacing. That the difference between the maximum frequency of the first uplink frequency domain resource and the minimum frequency of the first downlink frequency domain resource is equal to the difference between the maximum frequency of the first downlink frequency domain resource and the minimum frequency of the second uplink frequency domain resource may be understood as that a frequency domain spacing between the first uplink frequency domain resource and the first downlink frequency domain resource is equal to a frequency domain spacing between the second uplink frequency domain resource and the first downlink frequency domain resource.

In a possible implementation, a quantity of frequency domain resource blocks in the first uplink frequency domain resource is equal to a quantity of frequency domain resource blocks in the second uplink frequency domain resource.

In the solution provided in this application, the quantity of frequency domain resource blocks in the first uplink frequency domain resource may be equal to the quantity of frequency domain resource blocks in the second uplink frequency domain resource. In this way, the first indication information may indicate only the quantity of frequency domain resource blocks in the first uplink frequency domain resource or the quantity of frequency domain resource blocks in the second uplink frequency domain resource, and the terminal device can determine the quantity of frequency domain resource blocks in the first uplink frequency domain resource and the quantity of frequency domain resource blocks in the second uplink frequency domain resource, so that signaling overheads can be reduced.

In a possible implementation, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In the solution provided in this application, the network device may indicate the terminal device by using two fields. In other words, the first indication information may include the first field and the second field. Because the quantity of frequency domain resource blocks in the first uplink frequency domain resource is equal to the quantity of frequency domain resource blocks in the second uplink frequency domain resource, the first field needs to indicate the quantity of frequency domain resource blocks in only the first uplink frequency domain resource or the second uplink frequency domain resource, and the terminal device can determine the quantity of frequency domain resource blocks in the first uplink frequency domain resource and the quantity of frequency domain resource blocks in the second uplink frequency domain resource based on the first field. The second field may indicate the quantity of frequency domain resource blocks in the first downlink frequency domain resource. The terminal device can determine the quantity of frequency domain resource blocks in the first downlink frequency domain resource based on the second field, so that signaling overheads can be reduced.

In a possible implementation, the determining the first uplink frequency domain resource, the second uplink frequency domain resource, and the first downlink frequency domain resource on the carrier based on the first indication information includes: determining the first uplink frequency domain resource and the second uplink frequency domain resource based on the first field, where a minimum frequency of the first uplink frequency domain resource is a minimum frequency of the carrier, and a maximum frequency of the second uplink frequency domain resource is a maximum frequency of the carrier; and determining the first downlink frequency domain resource based on the second field, where a center frequency of the first downlink frequency domain resource is a center frequency of the carrier.

In the solution provided in this application, a carrier may be preset. The terminal device may determine the quantity of frequency domain resource blocks in the first uplink frequency domain resource and the quantity of frequency domain resource blocks in the second uplink frequency domain resource based on the first field, and may further determine the quantity of frequency domain resource blocks in the first downlink frequency domain resource based on the second field. The frequency of the first uplink frequency domain resource is lower than the frequency of the first downlink frequency domain resource, and the frequency of the second uplink frequency domain resource is higher than the frequency of the first downlink frequency domain resource. When the terminal device can determine that the minimum frequency of the first uplink frequency domain resource is the minimum frequency of the carrier, and the maximum frequency of the second uplink frequency domain resource is the maximum frequency of the carrier, because the first downlink frequency domain resource is between the first uplink frequency domain resource and the second uplink frequency domain resource, the frequency domain spacing between the first uplink frequency domain resource and the first downlink frequency domain resource is equal to the frequency domain spacing between the second uplink frequency domain resource and the first downlink frequency domain resource, and a frequency domain length of the carrier is preset, it may be determined that the center frequency of the first downlink frequency domain resource is the center frequency of the carrier. In this way, a frequency domain resource configuration pattern may be a symmetric pattern, that is, the first uplink frequency domain resource, the second uplink frequency domain resource, and the first downlink frequency domain resource are symmetric with respect to the center frequency of the first downlink frequency domain resource. In this way, the network device may use the first indication information to indicate a frequency domain resource configuration in only a half pattern, and the terminal device can determine configuration of all uplink and downlink resources on the carrier, so that signaling overheads can be reduced.

It should be understood that a difference between a frequency corresponding to the center frequency of the carrier and the minimum frequency of the carrier is equal to a difference between the frequency corresponding to the center frequency of the carrier and the maximum frequency of the carrier. A difference between a frequency corresponding to the center frequency of the first downlink frequency domain resource and the minimum frequency of the first downlink frequency domain resource is equal to a difference between the frequency corresponding to the center frequency of the first downlink frequency domain resource and the maximum frequency of the first downlink frequency domain resource.

In a possible implementation, the first time period includes a downlink time period in an uplink-downlink slot format in a cell-level configuration.

In the solution provided in this application, the first time period may be a time period on a carrier in time domain, and the first time period may be at least a time period that is not shorter than the downlink time period in the uplink-downlink slot format in the cell-level configuration. In this way, the first indication information can help implement more flexible uplink and downlink resource configuration.

In a possible implementation, the first indication information is carried in cell-specific signaling.

In the solution provided in this application, the first indication information may be carried in the cell-specific signaling, and the network device may not need to separately use one piece of signaling to send the first indication information to the terminal device, so that signaling overheads can be reduced.

According to a second aspect, this application provides a communication method. The method may be applied to a network device, or may be applied to a module (for example, a chip) in the network device. The following provides descriptions by using an example in which the method is applied to the network device. The communication method may be used to determine uplink and downlink resources, and may include: determining first indication information, where the first indication information indicates a first uplink frequency domain resource, a second uplink frequency domain resource, and a first downlink frequency domain resource on a carrier in a first time period, where a frequency of the first uplink frequency domain resource is lower than a frequency of the downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and sending the first indication information to a terminal device.

In the solution provided in this application, the network device may first determine the first indication information, where the first indication information may indicate the first uplink frequency domain resource, the second uplink frequency domain resource, and the first downlink frequency domain resource on the carrier in the first time period to the terminal device; and then send the first indication information to the terminal device. After receiving the first indication information, the terminal device may determine the first uplink frequency domain resource, the second uplink frequency domain resource, and the first downlink frequency domain resource on the carrier in the first time period based on the first indication information. In this way, the terminal device can determine uplink and downlink resources on a same carrier at the same time in a full-duplex FDD scenario, so that the terminal device can perform uplink and downlink communication on the same carrier at the same time in the full-duplex FDD scenario.

It should be understood that the first indication information may indicate a frequency domain resource configuration of a carrier in a time period, a frequency domain of the carrier may be preset, and the first time period may include one or more slots.

It should be understood that the second aspect is performed by the network device, and specific content of the second aspect corresponds to the content of the first aspect. For corresponding features of the second aspect and beneficial effects achieved by the second aspect, refer to the descriptions of the first aspect. To avoid repetition, detailed descriptions are appropriately omitted herein.

In a possible implementation, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In a possible implementation, a minimum frequency of the first uplink frequency domain resource is a minimum frequency of the carrier, and a maximum frequency of the second uplink frequency domain resource is a maximum frequency of the carrier; and a center frequency of the first downlink frequency domain resource is a center frequency of the carrier.

In a possible implementation, the first time period includes a downlink time period in an uplink-downlink slot format in a cell-level configuration.

In a possible implementation, the first indication information is carried in cell-specific signaling.

According to a third aspect, this application provides a communication method. The method may be applied to a terminal device, or may be applied to a module (for example, a chip) in the terminal device. The following provides descriptions by using an example in which the method is applied to the terminal device. The communication method may be used to determine uplink and downlink resources, and may include: receiving first indication information from a network device, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band; and determining the first uplink frequency domain resource and/or the second uplink frequency domain resource based on the first indication information.

In the solution provided in this application, the first frequency domain resource may be configured for uplink communication and downlink communication in a TDD slot format. The first uplink frequency domain resource and/or the second uplink frequency domain resource may be added based on the first frequency domain resource configuration, the maximum frequency of the first uplink frequency domain resource may be lower than the minimum frequency of the first frequency domain resource, and the minimum frequency of the second uplink frequency domain resource may be higher than the maximum frequency of the first frequency domain resource. To be specific, the network device may send the first indication information to the terminal device. The first indication information indicates the first uplink frequency domain resource and/or the second uplink frequency domain resource on the carrier in the first time period. After receiving the first indication information, the terminal device may determine the first uplink frequency domain resource and/or the second uplink frequency domain resource. In the solution provided in this application, the first indication information may be additionally added to signaling of the first frequency domain resource configured in a TDD slot format, and the first indication information indicates the first uplink frequency domain resource and/or the second uplink frequency domain resource added based on the first frequency domain resource. In this way, the terminal device can determine uplink and downlink resources on a same carrier at the same time in a full-duplex FDD scenario, so that the terminal device can perform uplink and downlink communication on the same carrier at the same time in the full-duplex FDD scenario.

It should be understood that a band may be a predefined frequency range. The first uplink frequency domain resource may include a frequency domain resource block with a lowest frequency or a smallest sequence number on the carrier, and the second uplink frequency domain resource may include a frequency domain resource block with a highest frequency or a largest sequence number on the carrier.

In a possible implementation, the communication method may further include: receiving second indication information from the network device, where the second indication information indicates a second time period and a third time period, the first frequency domain resource is a downlink frequency domain resource in the second time period, the first frequency domain resource is an uplink frequency domain resource in the third time period, the first time period includes the second time period, and the first frequency domain resource is predetermined.

In the solution provided in this application, the network device may further send the second indication information to the terminal device, where the second indication information may indicate the second time period and the third time period. It may be understood that the second indication information indicates a downlink symbol and an uplink symbol corresponding to the first frequency domain resource, and the second indication information indicates, to the terminal device, that the first frequency domain resource is a downlink frequency domain resource in the second time period and the first frequency domain resource is an uplink frequency domain resource in the third time period. The first frequency domain resource may be indicated by other indication information, or may be preset. The first time period may include at least the second time period, that is, the first time period may include the second time period, or may include the second time period and the third time period.

In a possible implementation, a difference between a maximum frequency of the first uplink frequency domain resource and a minimum frequency of the first frequency domain resource is equal to a difference between a maximum frequency of the first frequency domain resource and a minimum frequency of the second uplink frequency domain resource.

In the solution provided in this application, a maximum frequency of a frequency domain resource may be understood as a frequency corresponding to a subcarrier with a highest frequency in the frequency domain resource. A minimum frequency of a frequency domain resource may be understood as a frequency corresponding to a subcarrier with a lowest frequency in the frequency domain resource. Specifically, the maximum frequency of the first uplink frequency domain resource may be understood as a frequency corresponding to a subcarrier with a highest frequency in the first uplink frequency domain resource, the minimum frequency of the first downlink frequency domain resource may be understood as a frequency corresponding to a subcarrier with a lowest frequency in the first downlink frequency domain resource, the maximum frequency of the first downlink frequency domain resource may be understood as a frequency corresponding to a subcarrier with a highest frequency in the first downlink frequency domain resource, and the minimum frequency of the second uplink frequency domain resource may be understood as a frequency corresponding to a subcarrier with a lowest frequency in the second uplink frequency domain resource. A subcarrier spacing used for measurement may be a predefined subcarrier spacing. That the difference between the maximum frequency of the first uplink frequency domain resource and the minimum frequency of the first frequency domain resource is equal to the difference between the maximum frequency of the first frequency domain resource and the minimum frequency of the second uplink frequency domain resource may be understood as that a frequency domain spacing between the first uplink frequency domain resource and the first frequency domain resource is equal to a frequency domain spacing between the second uplink frequency domain resource and the first frequency domain resource.

In a possible implementation, a quantity of frequency domain resource blocks in the first uplink frequency domain resource is equal to a quantity of frequency domain resource blocks in the second uplink frequency domain resource.

In the solution provided in this application, the quantity of frequency domain resource blocks in the first uplink frequency domain resource may be equal to the quantity of frequency domain resource blocks in the second uplink frequency domain resource. In this way, the first indication information may indicate only the quantity of frequency domain resource blocks in the first uplink frequency domain resource or the quantity of frequency domain resource blocks in the second uplink frequency domain resource, and the terminal device can determine the quantity of frequency domain resource blocks in the first uplink frequency domain resource and the quantity of frequency domain resource blocks in the second uplink frequency domain resource, so that signaling overheads can be reduced.

In a possible implementation, the first indication information indicates the quantity of resource blocks in the first uplink frequency domain resource and/or the second uplink frequency domain resource.

In the solution provided in this application, the first indication information may indicate the quantity of resource blocks in the first uplink frequency domain resource, or may indicate the quantity of resource blocks in the second uplink frequency domain resource, or may indicate the quantity of resource blocks in the first uplink frequency domain resource and the quantity of resource blocks in the second uplink frequency domain resource. When the first indication information indicates the first uplink frequency domain resource and the second uplink frequency domain resource, because the quantity of frequency domain resource blocks in the first uplink frequency domain resource is equal to the quantity of frequency domain resource blocks in the second uplink frequency domain resource, the first indication information may indicate a quantity of frequency domain resource blocks in only one uplink frequency domain resource, that is, the quantity of frequency domain resource blocks in the first uplink frequency domain resource or the quantity of frequency domain resource blocks in the second uplink frequency domain resource, and the terminal device can determine the quantity of frequency domain resource blocks in the first uplink frequency domain resource and the quantity of frequency domain resource blocks in the second uplink frequency domain resource. In this way, signaling overheads can be reduced.

In a possible implementation, the determining the first uplink frequency domain resource and/or the second uplink frequency domain resource based on the first indication information includes: determining the first uplink frequency domain resource and/or the second uplink frequency domain resource based on the first indication information and a first frequency domain spacing, where the first frequency domain spacing is predetermined or is determined based on a bandwidth of the first frequency domain resource.

In the solution provided in this application, after receiving the first indication information from the network device, the terminal device may determine the first uplink frequency domain resource and/or the second uplink frequency domain resource based on the first indication information. Specifically, the terminal device may determine the first uplink frequency domain resource and/or the second uplink frequency domain resource based on the first indication information and the first frequency domain spacing. When the first indication information indicates the first uplink frequency domain resource, the first frequency domain spacing may be a frequency domain spacing between the first uplink frequency domain resource and the first frequency domain resource, and the terminal device may determine the first uplink frequency domain resource based on the frequency domain spacing and the first indication information. When the first indication information indicates the second uplink frequency domain resource, the first frequency domain spacing may be a frequency domain spacing between the second uplink frequency domain resource and the first frequency domain resource, and the terminal device may determine the second uplink frequency domain resource based on the frequency domain spacing and the first indication information. When the first indication information indicates the first uplink frequency domain resource and the second uplink frequency domain resource, the first frequency domain spacing may be a frequency domain spacing between the first uplink frequency domain resource and the first frequency domain resource and a frequency domain spacing between the second uplink frequency domain resource and the first frequency domain resource, and the terminal device may determine the first uplink frequency domain resource and the second uplink frequency domain resource based on the first indication information and the two frequency domain spacings. It should be understood that the first frequency domain spacing may be 0.

In a possible implementation, the first indication information and the second indication information are carried in cell-specific signaling.

In the solution provided in this application, the first indication information and the second indication information may be carried in the cell-specific signaling, and the network device may not need to separately use one piece of signaling to send the first indication information and/or the second indication information to the terminal device, so that signaling overheads can be reduced.

According to a fourth aspect, this application provides a communication method. The method may be applied to a network device, or may be applied to a module (for example, a chip) in the network device. The following provides descriptions by using an example in which the method is applied to the network device. The communication method may be used to determine a frequency domain resource, and may include: determining first indication information, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band; and sending the first indication information to the terminal device.

In the solution provided in this application, the network device may first determine the first indication information, where the first indication information may indicate the first uplink frequency domain resource and/or the second uplink frequency domain resource on the carrier in the first time period; and then send the first indication information to the terminal device. After receiving the first indication information, the terminal device may determine the first uplink frequency domain resource and/or the second uplink frequency domain resource. The first indication information may be additionally added to signaling of the first frequency domain resource configured in a TDD slot format, and indicates the first uplink frequency domain resource and/or the second uplink frequency domain resource added based on the first frequency domain resource. A maximum frequency of the first uplink frequency domain resource may be lower than a minimum frequency of the first frequency domain resource, and a minimum frequency of the second uplink frequency domain resource may be higher than a maximum frequency of the first frequency domain resource. In this way, the terminal device can determine uplink and downlink resources on a same carrier at the same time in a full-duplex FDD scenario, so that the terminal device can perform uplink and downlink communication on the same carrier at the same time in the full-duplex FDD scenario.

It should be understood that the fourth aspect is performed by the network device, and specific content of the fourth aspect corresponds to the content of the third aspect. For corresponding features of the fourth aspect and beneficial effects achieved by the fourth aspect, refer to the descriptions of the third aspect. To avoid repetition, detailed descriptions are appropriately omitted herein.

In a possible implementation, the communication method may further include: sending second indication information to the terminal device, where the second indication information indicates the first frequency domain resource, the first frequency domain resource is a downlink frequency domain resource in a second time period and is an uplink frequency domain resource in a third time period, and the first time period includes the second time period.

In a possible implementation, a difference between a maximum frequency of the first uplink frequency domain resource and a minimum frequency of the first frequency domain resource is equal to a difference between a maximum frequency of the first frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information indicates the quantity of resource blocks in the first uplink frequency domain resource and/or the second uplink frequency domain resource.

In a possible implementation, the first indication information and the second indication information are carried in cell-specific signaling.

According to a fifth aspect, a communication apparatus is provided. The communication apparatus may be a terminal device, or may be a module (for example, a chip) in the terminal device. The communication apparatus may include:
a receiving unit, configured to receive first indication information from a network device, where the first indication information indicates a first uplink frequency domain resource, a second uplink frequency domain resource, and a first downlink frequency domain resource on a carrier in a first time period, and the first time period includes one or more slots, where a frequency of the first uplink frequency domain resource is lower than a frequency of the first downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
a determining unit, configured to determine the first uplink frequency domain resource, the second uplink frequency domain resource, and the first downlink frequency domain resource on the carrier based on the first indication information.

In a possible implementation, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In a possible implementation, that the determining unit determines the first uplink frequency domain resource, the second uplink frequency domain resource, and the first downlink frequency domain resource on the carrier based on the first indication information includes: determining the first uplink frequency domain resource and the second uplink frequency domain resource based on the first field, where a minimum frequency of the first uplink frequency domain resource is a minimum frequency of the carrier, and a maximum frequency of the second uplink frequency domain resource is a maximum frequency of the carrier; and determining the first downlink frequency domain resource based on the second field, where a center frequency of the first downlink frequency domain resource is a center frequency of the carrier.

In a possible implementation, the first time period includes a downlink time period in an uplink-downlink slot format in a cell-level configuration.

In a possible implementation, the first indication information is carried in cell-specific signaling.

According to a sixth aspect, a communication apparatus is provided. The communication apparatus may be a network device, or may be a module (for example, a chip) in the network device. The communication apparatus may include:
a determining unit, configured to determine first indication information, where the first indication information indicates a first uplink frequency domain resource, a second uplink frequency domain resource, and a first downlink frequency domain resource on a carrier in a first time period, where a frequency of the first uplink frequency domain resource is lower than a frequency of the first downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
a sending unit, configured to send the first indication information to a terminal device.

In a possible implementation, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In a possible implementation, a minimum frequency of the first uplink frequency domain resource is a minimum frequency of the carrier, and a maximum frequency of the second uplink frequency domain resource is a maximum frequency of the carrier; and a center frequency of the first downlink frequency domain resource is a center frequency of the carrier.

In a possible implementation, the first time period includes a downlink time period in an uplink-downlink slot format in a cell-level configuration.

In a possible implementation, the first indication information is carried in cell-specific signaling.

According to a seventh aspect, a communication apparatus is provided. The communication apparatus may be a terminal device, or may be a module (for example, a chip) in the terminal device. The communication apparatus may include:
a first receiving unit, configured to receive first indication information from a network device, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band; and
a determining unit, configured to determine the first uplink frequency domain resource and/or the second uplink frequency domain resource based on the first indication information.

In a possible implementation, the communication apparatus may further include:
a second receiving unit, configured to receive second indication information from the network device, where the second indication information indicates a second time period and a third time period, the first frequency domain resource is a downlink frequency domain resource in the second time period, the first frequency domain resource is an uplink frequency domain resource in the third time period, the first time period includes the second time period, and the first frequency domain resource is predetermined.

In a possible implementation, a difference between a maximum frequency of the first uplink frequency domain resource and a minimum frequency of the first frequency domain resource is equal to a difference between a maximum frequency of the first frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information indicates the quantity of resource blocks in the first uplink frequency domain resource and/or the second uplink frequency domain resource.

In a possible implementation, that the determining unit determines the first uplink frequency domain resource and/or the second uplink frequency domain resource based on the first indication information includes: determining the first uplink frequency domain resource and/or the second uplink frequency domain resource based on the first indication information and a first frequency domain spacing, where the first frequency domain spacing is predetermined or is determined based on a bandwidth of the first frequency domain resource.

In a possible implementation, the first indication information and the second indication information are carried in cell-specific signaling.

According to an eighth aspect, a communication apparatus is provided. The communication apparatus may be a network device, or may be a module (for example, a chip) in the network device. The communication apparatus may include:
a determining unit, configured to determine first indication information, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band; and
a first sending unit, configured to send the first indication information to a terminal device.

In a possible implementation, the communication apparatus may further include:
a second sending unit, configured to send second indication information to the terminal device, where the second indication information indicates the first frequency domain resource, the first frequency domain resource is a downlink frequency domain resource in a second time period and is an uplink frequency domain resource in a third time period, and the first time period includes the second time period.

In a possible implementation, a difference between a maximum frequency of the first uplink frequency domain resource and a minimum frequency of the first frequency domain resource is equal to a difference between a maximum frequency of the first frequency domain resource and a minimum frequency of the second uplink frequency domain resource.

In a possible implementation, a quantity of frequency domain resource blocks in the first uplink frequency domain resource is equal to a quantity of frequency domain resource blocks in the second uplink frequency domain resource.

In a possible implementation, the first indication information indicates the quantity of resource blocks in the first uplink frequency domain resource and/or the second uplink frequency domain resource.

In a possible implementation, the first indication information and the second indication information are carried in cell-specific signaling.

According to a ninth aspect, a communication apparatus is provided. The communication apparatus may be a terminal device, or may be a module (for example, a chip) in the terminal device. The communication apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the communication method according to any one of the first aspect or the implementations of the first aspect; or
the communication method according to any one of the third aspect or the implementations of the third aspect.

According to a tenth aspect, a communication apparatus is provided. The communication apparatus may be a network device, or may be a module (for example, a chip) in the network device. The communication apparatus may include a processor, a memory, an input interface, and an output interface. The input interface is configured to receive information from another communication apparatus other than the communication apparatus, and the output interface is configured to output information to another communication apparatus other than the communication apparatus. The processor invokes a computer program stored in the memory to perform the communication method according to any one of the second aspect and the implementations of the second aspect; or
the communication method according to any one of the fourth aspect or the implementations of the fourth aspect.

According to an eleventh aspect, this application provides a communication system. The communication system includes the communication apparatus according to the ninth aspect and the communication apparatus according to the tenth aspect.

According to a twelfth aspect, this application provides a computer-readable storage medium. The computer-readable storage medium stores a computer program or computer instructions. When the computer program or the computer instructions is/are run, some or all of the steps of the communication method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect are performed.

According to a thirteenth aspect, this application provides a computer program product including executable instructions. When the computer program product runs on user equipment, some or all of the steps of the communication method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect are performed.

According to a fourteenth aspect, this application provides a chip system. The chip system includes a processor, and may further include a memory, configured to implement the communication method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect. The chip system may include a chip, or may include a chip and another discrete component.

### BRIEF DESCRIPTION OF DRAWINGS

FIG. 1 is a schematic diagram of a data transmission manner in a duplex mode according to an embodiment of this application;
FIG. 2 is a schematic diagram of an application scenario according to an embodiment of this application;
FIG. 3 is a schematic diagram of another application scenario according to an embodiment of this application;
FIG. 4 is a schematic flowchart of a communication method according to an embodiment of this application;
FIG. 5 is a schematic diagram of a frequency domain resource configuration according to an embodiment of this application;
FIG. 6 is a schematic flowchart of another communication method according to an embodiment of this application;
FIG. 7 is a schematic diagram of another frequency domain resource configuration according to an embodiment of this application;
FIG. 8 is a schematic diagram of a structure of a communication apparatus according to an embodiment of this application;
FIG. 9 is a schematic diagram of a structure of another communication apparatus according to an embodiment of this application;
FIG. 10 is a schematic diagram of a structure of another communication apparatus according to an embodiment of this application;
FIG. 11 is a schematic diagram of a structure of another communication apparatus according to an embodiment of this application;
FIG. 12 is a schematic diagram of a structure of another communication apparatus according to an embodiment of this application; and
FIG. 13 is a schematic diagram of a structure of a terminal according to an embodiment of this application.

### DESCRIPTION OF EMBODIMENTS

For ease of understanding of this application, related technical knowledge in embodiments of this application is first described herein.

### 1. Duplex mode

In a wireless communication system, communication may be classified into different types based on different types of sending nodes and receiving nodes. Usually, sending information to a terminal device by a network device is referred to as downlink (downlink, DL) communication, and sending information to a network device by a terminal device is referred to as uplink (uplink, UL) communication.

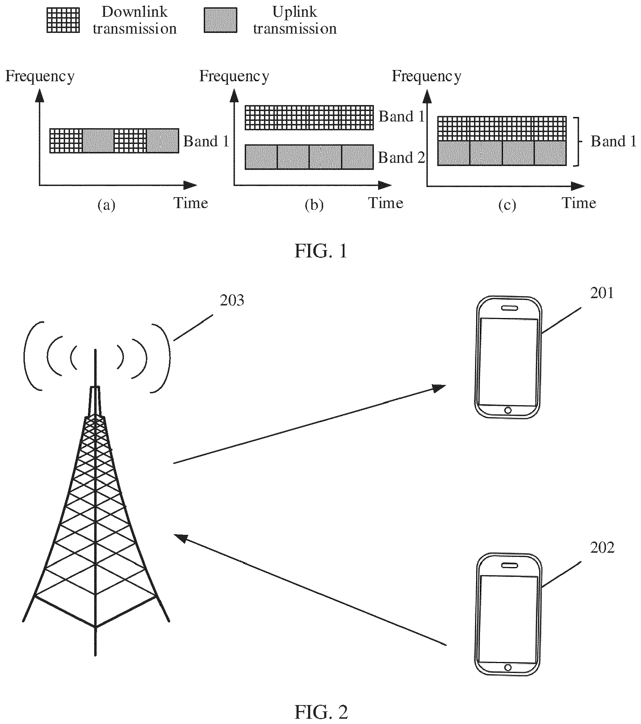

FIG. 1 is a schematic diagram of a data transmission manner in a duplex mode according to an embodiment of this application. Existing duplex modes may be classified into TDD, frequency division duplex (frequency division duplex, FDD), and full-duplex FDD.
(1) TDD is actually a half-duplex technology, that is, data can only be received or sent at a same moment. Uplink transmission and downlink transmission in time division duplex are separated in terms of time, and receiving and sending occur in different slots on a same carrier (band), as shown in (a) in FIG. 1.
(2) FDD refers to a data transmission manner in which uplink transmission and downlink transmission are separately performed on carriers in different bands at the same time, and a frequency difference between an uplink carrier and a downlink carrier is relatively large. As shown in (b) in FIG. 1, downlink transmission is performed on a carrier in a band 1, and uplink transmission is performed on a carrier in a band 2.
(3) Full-duplex FDD may also be referred to as in-band full-duplex FDD, and refers to a data transmission manner in which uplink transmission and downlink transmission are separately performed at different frequencies in one band at the same time. As shown in (c) in FIG. 1, uplink transmission and downlink transmission are performed at different frequencies in a band 1.

### 2. Frame structure configuration manner in a 5th generation mobile network (5th generation mobile networks, 5G) new radio access technology (new radio access technology, NR)

In a 5th generation wireless communication system, that is, an NR system, a plurality of radio frames may be obtained through division in time domain, a length of each radio frame is 10 ms, and one radio frame includes a plurality of slots. One slot (slot) may include 14 orthogonal frequency division multiplexing (orthogonal frequency division multiplexing, OFDM) symbols. When a subcarrier spacing (subcarrier spacing, SCS) is 15 kHz, a time domain length of one slot is 1 ms. Symbols in each slot may be classified into three types: downlink symbol (marked as D), uplink symbol (marked as U), and flexible symbol (marked as X). Downlink data may be sent on a downlink symbol and a flexible symbol, and uplink data may be sent on an uplink symbol and a flexible symbol.

An NR frame structure is flexibly configured by using a combination of semi-static RRC configuration and dynamic downlink control information (downlink control information, DCI) configuration. The RRC configuration supports two manners: cell-specific RRC configuration and UE-specific RRC configuration. The DCI configuration supports two manners: slot format indicator (slot format indicator, SFI) direct indication and DCI scheduling decision.

### 3. Frequency domain resource

A frequency domain resource is a part of a band (band) configured by a network device for a terminal device, and is used for data transmission. Specifically, the frequency domain resource may be a component carrier (component carrier, CC), a bandwidth part (bandwidth part, BWP), a carrier band (carrier band), or the like. This is not limited in embodiments of this application. The BWP may be contiguous frequency domain resources, or may be non-contiguous frequency domain resources.

Frequency domain resources may include an uplink frequency domain resource and a downlink frequency domain resource. Specifically, the uplink frequency domain resource is a frequency domain resource configured by a network device for a terminal device to transmit uplink data, and the downlink frequency domain resource is a frequency domain resource configured by a network device for a terminal device to transmit downlink data. It should be understood that in embodiments of this application, uplink data is data sent by a terminal device to a network device, and downlink data is data sent by a network device to a terminal device.

Frequency domain resource configuration information is used to indicate an uplink frequency domain resource and a downlink frequency domain resource that are used for data transmission between a terminal device and a network device. Specifically, the frequency domain resource configuration information may include information such as a bandwidth parameter and a frequency domain position parameter. For example, when a frequency domain resource is a BWP, the frequency domain resource configuration information may also be referred to as BWP configuration information (BWP configuration information).

For a resource block (resource block, RB), N contiguous subcarriers in frequency domain may be referred to as one resource block. For example, one resource block in an LTE system includes 12 subcarriers, and one resource block in a 5G NR system also includes 12 subcarriers. With evolution of the communication system, one resource block may alternatively include another quantity of subcarriers.

A frequency domain resource block may include a plurality of subcarriers, and a quantity of subcarriers in the frequency domain resource block is equal to a quantity of subcarriers in a resource block. It may be understood that a frequency domain resource block is a resource block.

A maximum frequency of an uplink/downlink frequency domain resource is a frequency corresponding to a subcarrier with a highest frequency in the uplink/downlink frequency domain resource.

A minimum frequency of an uplink/downlink frequency domain resource is a frequency corresponding to a subcarrier with a lowest frequency in the uplink/downlink frequency domain resource.

A center frequency is an intermediate frequency in a frequency range corresponding to a channel bandwidth. A center frequency of a carrier is an intermediate frequency in a frequency range corresponding to a bandwidth of the carrier, and a difference between a frequency corresponding to the center frequency of the carrier and a minimum frequency of the carrier is equal to a difference between the frequency corresponding to the center frequency and a maximum frequency of the carrier.

### 4. Slot

A slot (slot) is a unit of a data transmission resource in time domain. One slot usually includes a plurality of symbols/chips, and the symbols/chips may have a same transmission direction or different transmission directions. One slot in a 5G NR system includes 14 OFDM symbols, a slot length corresponding to a 15-kHz subcarrier spacing is 1 ms, and a slot length corresponding to a 30-kHz subcarrier spacing is 0.5 ms. An OFDM symbol is a smallest time unit in time domain in an OFDM system.

A slot format (slot format) is used to indicate an uplink/downlink time domain resource configuration of a terminal device. For example, one slot includes 14 symbols, and a format of the slot specifies symbols used for uplink transmission, downlink transmission, and flexible transmission in the slot. For example, the first to the fourth symbols are used for uplink transmission, the fifth to the eleventh symbols are used for flexible transmission, and the twelfth to the fourteenth symbols are used for uplink transmission.

### 5. Subcarrier

A frequency domain resource is divided into several sub-resources in an OFDM system, and each sub-resource in frequency domain may be referred to as one subcarrier. The subcarrier may also be understood as a smallest granularity of a frequency domain resource.

A time-frequency resource unit is a smallest resource granularity in an OFDM system, is one OFDM symbol in time domain, and is one subcarrier in frequency domain.

A subcarrier spacing is a spacing value between center positions or peak positions of two adjacent subcarriers in frequency domain in an OFDM system. For example, a subcarrier spacing in a long term evolution (long term evolution, LTE) system is 15 kHz, and a subcarrier spacing in a 5G NR system may be 15 kHz, 30 kHz, 60 kHz, 120 kHz, or the like.

For a carrier, a bandwidth of the carrier includes a continuous frequency range in a band. The frequency range may be predetermined. For example, in an NR system, it is predetermined that a bandwidth of a carrier may be 5 MHz, 10 MHz, 15 MHz, or the like.

A band may also be referred to as a frequency band or an operating band, and includes an uplink operating band and a downlink operating band. The uplink/downlink operating band is a continuous frequency range, which is determined by a minimum frequency of the uplink/downlink operating band and a maximum frequency of the uplink/downlink band. When time division duplex is used in a system, an uplink operating band is a downlink operating band. When frequency division duplex is used in a system, an uplink operating band is not a downlink operating band.

A network device may notify a terminal device of uplink and downlink resources by using cell-specific semi-static uplink-downlink common configuration information. The cell-specific semi-static uplink-downlink common configuration information may include a reference subcarrier configuration parameter and a pattern (pattern). The pattern may be an uplink-downlink slot format in a cell-level configuration. The pattern may be determined by using five parameters: a slot configuration cycle, a quantity of downlink transmission slots, a quantity of downlink transmission symbols, a quantity of uplink transmission slots, and a quantity of uplink transmission symbols. The quantity of downlink slots and the quantity of downlink symbols indicate a downlink resource, that is, a downlink time period. The quantity of downlink slots represents a quantity of consecutive downlink-only slots at the beginning of a configured cycle, and the quantity of downlink symbols represents a quantity of consecutive downlink-only symbols after several downlink-only slots. The quantity of uplink slots and the quantity of uplink symbols indicate an uplink resource, that is, an uplink time period. The quantity of uplink slots represents a quantity of consecutive uplink-only slots before the end of the configured cycle, and the quantity of uplink symbols represents a quantity of consecutive uplink-only symbols before several uplink-only slots.

In a TDD scenario, to improve flexibility, uplink and downlink resources may be configured in slots and symbols. In a full-duplex FDD scenario, a terminal device performs uplink and downlink communication on a same carrier at the same time. If a network device configures uplink and downlink resources for the terminal device in slots and symbols, uplink and downlink configuration requirements for different frequency domain resources on a same carrier at the same time cannot be met.

Based on the foregoing problem, this application provides a communication method, so that a terminal device can perform uplink and downlink communication on a same carrier at the same time in a full-duplex FDD scenario.

In embodiments of this application, there may be two solutions to resolve the foregoing problem. Solution 1: A network device may send first indication information to a terminal device, to indicate a first uplink frequency domain resource, a second uplink frequency domain resource, and a first downlink frequency domain resource on a carrier in a first time period. The terminal device may determine the first uplink frequency domain resource, the second uplink frequency domain resource, and the first downlink frequency domain resource on the carrier based on the first indication information. Solution 2: A network device may send first indication information to a terminal device. The first indication information may indicate, based on a first frequency domain resource, a first uplink frequency domain resource and/or a second uplink frequency domain resource added on a carrier in a first time period. The terminal device may determine the first uplink frequency domain resource and/or the second uplink frequency domain resource on the carrier based on the first indication information. Other indication information may be used to indicate that uplink and downlink communication is performed in slots and symbols on the first frequency domain resource. In this way, the terminal device can determine uplink and downlink resources on a same carrier at the same time in the full-duplex FDD scenario, so that the terminal device can perform uplink and downlink communication on the same carrier at the same time in the full-duplex FDD scenario.

To better understand a communication method and apparatus and a computer-readable storage medium provided in embodiments of this application, the following first describes an application scenario in embodiments of this application. Based on whether a terminal device supports in-band full-duplex FDD, there may be the following application scenarios.

FIG. 2 is a schematic diagram of an application scenario according to an embodiment of this application. As shown in FIG. 2, the application scenario may include a first terminal device 201, a second terminal device 202, and a network device 203. Neither of the first terminal device 201 and the second terminal device 202 supports in-band full-duplex FDD. A terminal device that does not support in-band full-duplex FDD may receive a downlink signal sent by a network device or send an uplink signal to a network device. For example, the network device 203 may send a downlink signal to the first terminal device 201, and the second terminal device 202 may send an uplink signal to the network device 203.

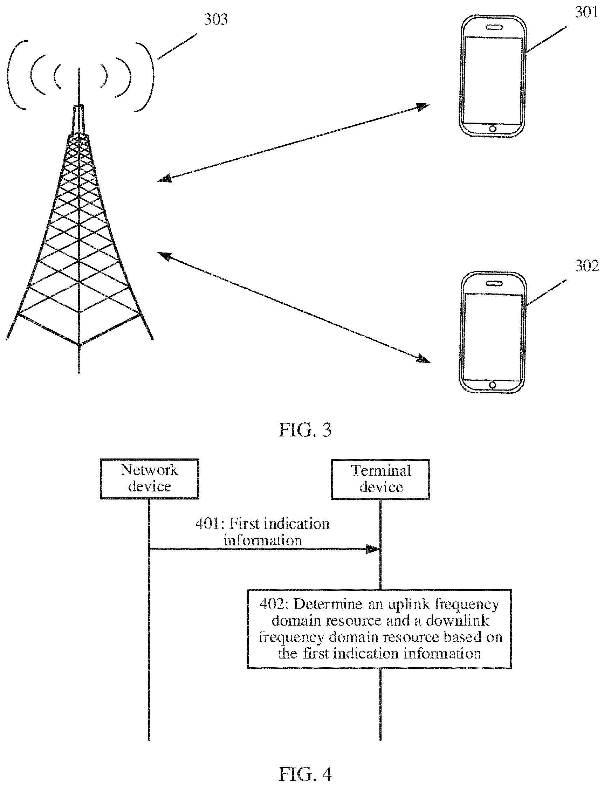

FIG. 3 is a schematic diagram of another application scenario according to an embodiment of this application. As shown in FIG. 3, the application scenario may include a first terminal device 301, a second terminal device 302, and a network device 303. The first terminal device 301 and the second terminal device 302 support full-duplex FDD. A terminal device that supports in-band full-duplex FDD may simultaneously receive a downlink signal sent by a network device and send an uplink signal to the network device. For example, the network device 303 may send a downlink signal to the first terminal device 301, and the first terminal device 301 may send an uplink signal to the network device 303. The network device 303 may send a downlink signal to the second terminal device 302, and the second terminal device 302 may send an uplink signal to the network device 303.

The technical solutions in embodiments of this application may be applied to various communication systems, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a 5th generation (5th generation, 5G) system, a communication system after 5G, or a new radio (new radio, NR) system. This is not limited in embodiments of this application.

The terminal device in embodiments of this application may also be referred to as a user terminal. The user terminal may be a device that has wireless sending and receiving functions and that can cooperate with a network device to provide a communication service for a user. Specifically, the user terminal may be UE, a user, a satellite phone, a satellite terminal, a subscriber unit (subscriber unit), a cellular phone (cellular phone), a smart phone (smart phone), a smart watch (smart watch), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. For example, the terminal device may be a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like. This is not specifically limited in embodiments of this application.

The network device in embodiments of this application may be a device configured to communicate with a terminal device. For example, the network device may be a base transceiver station (base transceiver station, BTS) in a global system for mobile communications (global system for mobile communications, GSM) or code division multiple access (code division multiple access), or may be a NodeB (NodeB, NB) in a wideband code division multiple access (wideband code division multiple access, WCDMA) system, or may be an evolved NodeB (evolved Node B, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network or a network after 5G, a network device in a future evolved PLMN network, or the like, for example, a transmitting and receiving point (TRP or TP) in an NR system, a gNB (gNB) in an NR system, or one antenna panel or a group of antenna panels (including a plurality of antenna panels) of a base station in a 5G system. This is not limited in embodiments of this application.

Optionally, the base station in embodiments of this application may include various forms of base stations, for example, a macro base station, a micro base station (also referred to as a small cell), a relay station, an access point, a next-generation base station (gNodeB, gNB), a transmitting and receiving point (transmitting and receiving point, TRP), a transmitting point (transmitting point, TP), a mobile switching center, and a device having a function of a base station in device-to-device (Device-to-Device, D2D), vehicle-to-everything (vehicle-to-everything, V2X), or machine-to-machine (machine-to-machine, M2M) communication. This is not specifically limited in embodiments of this application.

A specific structure of an execution body of a method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this application may indicate one or more devices and/or other machine-readable media configured to store information. The term "machine-readable media" may include but is not limited to a radio channel, and various other media that can store, include, and/or carry instructions and/or data.

Based on the foregoing network architecture, FIG. 4 is a schematic flowchart of a communication method according to an embodiment of this application. A function performed by a terminal device in this application may also be performed by a module (for example, a chip) in the terminal device, and a function performed by a network device in this application may also be performed by a module (for example, a chip) in the network device. The communication method may be used by the terminal device to determine uplink and downlink resources. As shown in FIG. 4, the communication method may include the following steps.

401: The network device sends first indication information to the terminal device.

Accordingly, the terminal device may receive the first indication information from the network device.

Optionally, the first indication information indicates a frequency domain resource configuration pattern on a carrier in a first time period. The frequency domain resource configuration pattern is used to determine an uplink frequency domain resource and a downlink frequency domain resource on the carrier in the first time period. In other words, the first indication information indicates the uplink frequency domain resource and the downlink frequency domain resource on the carrier in the first time period. The uplink frequency domain resource is a frequency domain resource block for uplink communication, and the downlink frequency domain resource is a frequency domain resource block for downlink communication.

In this embodiment of this application, the frequency domain resource block may be a resource block. A resource block (resource block) and a frequency domain resource block in a current NR protocol may have a same physical meaning.

In this embodiment of this application, a subcarrier or a resource block included in the carrier is determined in advance. A bandwidth of the carrier includes a continuous frequency range, and the frequency range may be determined in advance. For example, in an NR system, it is predetermined that a bandwidth of a carrier may be 5 MHz, 10 MHz, or the like.

In this embodiment of this application, the first time period includes one or more slots. The first time period may be a time period corresponding to a carrier in time domain. When the first time period includes one slot, the first indication information may indicate a frequency domain resource configuration pattern of the terminal device at a current moment at which data needs to be transmitted. When the first time period includes a plurality of slots, the first indication information may indicate frequency domain resource configuration patterns of the terminal device in all slots in the first time period.

Optionally, the first time period includes a downlink time period in an uplink-downlink slot format in a cell-level configuration. To be specific, the first time period is not shorter than a time period corresponding to a downlink symbol determined based on the uplink-downlink slot format in the cell-level configuration. This may be understood as that the first time period may be a time period longer than or equal to the downlink time period in the uplink-downlink slot format in the cell-level configuration. To be specific, the first time period may include an uplink time period and the downlink time period in the uplink-downlink slot format in the cell-level configuration. In other words, the first time period may include an uplink symbol and a downlink symbol that are determined based on the uplink-downlink slot format in the cell-level configuration. It is assumed that the first time period includes all time periods in one configuration cycle in the uplink-downlink slot format in the cell-level configuration, and the entire first time period is configured as an uplink frequency domain resource, a downlink frequency domain resource, and an uplink frequency domain resource. In this case, if the network device does not transmit downlink data in the last part of time units, because the downlink frequency domain resource is configured in advance, this part of spectrum resource cannot be used, resulting in a resource waste. Therefore, the first time period indicated by the first indication information may be at least a time period that is not shorter than the downlink time period in the uplink-downlink slot format in the cell-level configuration, so that more flexible uplink and downlink resource configuration can be implemented.

Optionally, that the first indication information may indicate a frequency domain resource configuration pattern on a carrier in a first time period may include: The first indication information indicates a plurality of frequency domain resource configuration patterns on the carrier in the first time period, and any one of the frequency domain resource configuration patterns is used to determine an uplink frequency domain resource and a downlink frequency domain resource on a carrier in one time unit in the first time period. The time unit is included in the first time period, and the time unit includes one or more slots. To be specific, the first indication information includes a plurality of pieces of indication information for indicating an uplink frequency domain resource and a downlink frequency domain resource on a carrier in a time unit, the time unit includes one or more slots, and the first time period includes a plurality of time units. In this way, frequency domain resource configuration on the carrier in the first time period is more flexible. For example, a carrier bandwidth of the terminal device is 10 MHz, and includes 50 frequency domain resource blocks numbered RB 0 to RB 49. The first time period includes 20 slots numbered slot 0 to slot 19, and may be divided into four time units numbered time unit 0 to time unit 3. Time unit 0 to time unit 3 respectively include slot 0 to slot 4, slot 5 to slot 9, slot 10 to slot 14, and slot 15 to slot 19. The first indication information indicates four frequency domain resource configuration patterns, and the four frequency domain resource configuration patterns are respectively used to determine uplink frequency domain resources and downlink frequency domain resources on a carrier in time unit 0 to time unit 3. Frequency domain resource configuration pattern 0 indicates that RB 0 to RB 9 and RB 39 to RB 49 on a carrier in slot 0 to slot 4 are used for uplink communication, and RB 10 to RB 38 are used for downlink communication. Frequency domain resource configuration pattern 1 indicates that RB 0 to RB 9 and RB 35 to RB 49 on a carrier in slot 5 to slot 9 are used for uplink communication, and RB 10 to RB 34 are used for downlink communication. Frequency domain resource configuration pattern 2 indicates that RB 0 to RB 14 and RB 35 to RB 49 on a carrier in slot 10 to slot 14 are used for uplink communication, and RB 15 to RB 34 are used for downlink communication. Frequency domain resource configuration pattern 3 indicates that RB 0 to RB 19 and RB 30 to RB 49 on a carrier in slot 15 to slot 19 are used for uplink communication, and RB 20 to RB 29 are used for downlink communication. Specifically, specific frequency domain resource configuration patterns indicated by the first indication information may be determined by the terminal device according to a preconfigured policy. The preconfigured policy may be sent by the network device to the terminal device, or may be configured on the terminal device before delivery.

Frequency domain resource configuration patterns may be classified into a first frequency domain resource configuration pattern and a second frequency domain resource configuration pattern. There are the following possibilities.

### (1) For the first frequency domain resource configuration pattern:

The first frequency domain resource configuration pattern is used to determine at least one uplink frequency domain resource and at least one downlink frequency domain resource on the carrier in the first time period. The uplink frequency domain resource is a frequency domain resource block for uplink communication, and the downlink frequency domain resource is a frequency domain resource block for downlink communication. It may be understood that the first frequency domain resource configuration pattern is used to determine a first uplink frequency domain resource and a first downlink frequency domain resource; or a first downlink frequency domain resource and a first uplink frequency domain resource; or a first uplink frequency domain resource, a first downlink frequency domain resource, and a second downlink frequency domain resource; or a first downlink frequency domain resource, a second downlink frequency domain resource, and a first uplink frequency domain resource; or a first downlink frequency domain resource, a first uplink frequency domain resource, a second uplink frequency domain resource, and a second downlink frequency domain resource; or a first downlink frequency domain resource, a first uplink frequency domain resource, a second downlink frequency domain resource, and a second downlink frequency domain resource; or the like.

Optionally, the first frequency domain resource configuration pattern is used to determine a first uplink frequency domain resource and a first downlink frequency domain resource. The first indication information indicates the first uplink frequency domain resource and the first downlink frequency domain resource. A frequency of the first uplink frequency domain resource is lower than a frequency of the first downlink frequency domain resource, or a sequence number of any resource block in the first uplink frequency domain resource is less than a sequence number of any resource block in the first downlink frequency domain resource.

Alternatively, the first frequency domain resource configuration pattern indicates a first downlink frequency domain resource and a first uplink frequency domain resource. The first indication information indicates the first downlink frequency domain resource and the first uplink frequency domain resource. A frequency of the first downlink frequency domain resource is lower than a frequency of the first uplink frequency domain resource, or a sequence number of any resource block in the first downlink frequency domain resource is less than a sequence number of any resource block in the first uplink frequency domain resource.

Optionally, the first frequency domain resource configuration pattern is used to determine a first downlink frequency domain resource, a first uplink frequency domain resource, a second uplink frequency domain resource, and a second downlink frequency domain resource. The first indication information indicates the first downlink frequency domain resource, the first uplink frequency domain resource, the second uplink frequency domain resource, and the second downlink frequency domain resource. A frequency of the first downlink frequency domain resource is lower than a frequency of the first uplink frequency domain resource and a frequency of the second uplink frequency domain resource, and a frequency of the second downlink frequency domain resource is higher than the frequency of the first uplink frequency domain resource and the frequency of the second uplink frequency domain resource. Alternatively, a sequence number of any resource block in the first downlink frequency domain resource is less than a sequence number of any resource block in the first uplink frequency domain resource and a sequence number of any resource block in the second uplink frequency domain resource, and a sequence number of any resource block in the second downlink frequency domain resource is greater than the sequence number of any resource block in the first uplink frequency domain resource and the sequence number of any resource block in the second uplink frequency domain resource.

### (2) For the second frequency domain resource configuration pattern:

The second frequency domain resource configuration pattern is used to determine a first uplink frequency domain resource, a second uplink frequency domain resource, and a first downlink frequency domain resource on the carrier in the first time period. The first indication information indicates the first uplink frequency domain resource, the second uplink frequency domain resource, and the first downlink frequency domain resource on the carrier in the first time period. The first uplink frequency domain resource and the second uplink frequency domain resource may be used for uplink communication between the terminal device and the network device, and the first downlink frequency domain resource may be used for downlink communication between the network device and the terminal device. A frequency of the first uplink frequency domain resource is lower than a frequency of the first downlink frequency domain resource, and a frequency of the second uplink frequency domain resource is higher than the frequency of the first downlink frequency domain resource. Alternatively, a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource.

Optionally, there is a frequency domain spacing between the first uplink frequency domain resource and the first downlink frequency domain resource, and a frequency domain spacing between the first downlink frequency domain resource and the second uplink frequency domain resource. To be specific, the frequency domain spacing between the first uplink frequency domain resource and the first downlink frequency domain resource may be a first frequency domain spacing, and the frequency domain spacing between the first downlink frequency domain resource and the second uplink frequency domain resource may be a second frequency domain spacing. The first frequency domain spacing is a quantity of resource blocks between a resource block with a largest sequence number in the first uplink frequency domain resource and a resource block with a smallest sequence number in the first downlink frequency domain resource. Alternatively, the first frequency domain spacing is a difference between a sequence number of a resource block with a largest sequence number in the first uplink frequency domain resource and a sequence number of a resource block with a smallest sequence number in the first downlink frequency domain resource minus 1. The second frequency domain spacing is a quantity of resource blocks between a resource block with a largest sequence number in the first downlink frequency domain resource and a resource block with a smallest sequence number in the second uplink frequency domain resource. Alternatively, the second frequency domain spacing is a difference between a sequence number of a resource block with a largest sequence number in the first downlink frequency domain resource and a sequence number of a resource block with a smallest sequence number in the second uplink frequency domain resource minus 1. The first frequency domain spacing and the second frequency domain spacing each may be 0. It should be understood that, because the first frequency domain spacing and the second frequency domain spacing exist, adjacent-channel interference between uplink communication and downlink communication can be reduced.

Optionally, the first uplink frequency domain resource may include a frequency domain resource block with a lowest frequency or a smallest sequence number on the carrier, and the second uplink frequency domain resource may include a frequency domain resource block with a highest frequency or a largest sequence number on the carrier.

There may be two types of second frequency domain resource configuration patterns, that is, the second frequency domain resource configuration pattern may be a third frequency domain resource configuration pattern or a fourth frequency domain resource configuration pattern.

Specifically, based on the second frequency domain resource configuration pattern, in the third frequency domain resource configuration pattern, a quantity of frequency domain resource blocks in the first uplink frequency domain resource may be different from that in the second uplink frequency domain resource, and/or a difference between a maximum frequency of the first uplink frequency domain resource and a minimum frequency of the first downlink frequency domain resource may be unequal to a difference between a maximum frequency of the first downlink frequency domain resource and a minimum frequency of the second uplink frequency domain resource.

A maximum frequency of a frequency domain resource may be understood as a frequency corresponding to a subcarrier with a highest frequency in the frequency domain resource. A minimum frequency of a frequency domain resource may be understood as a frequency corresponding to a subcarrier with a lowest frequency in the frequency domain resource. Specifically, the maximum frequency of the first uplink frequency domain resource may be understood as a frequency corresponding to a subcarrier with a highest frequency in the first uplink frequency domain resource, the minimum frequency of the first downlink frequency domain resource may be understood as a frequency corresponding to a subcarrier with a lowest frequency in the first downlink frequency domain resource, the maximum frequency of the first downlink frequency domain resource may be understood as a frequency corresponding to a subcarrier with a highest frequency in the first downlink frequency domain resource, and the minimum frequency of the second uplink frequency domain resource may be understood as a frequency corresponding to a subcarrier with a lowest frequency in the second uplink frequency domain resource.

Based on the second frequency domain resource configuration pattern, the fourth frequency domain resource configuration pattern may be a pattern that is symmetric with respect to a center frequency of the first downlink frequency domain resource.

The fourth frequency domain resource configuration pattern is used to determine a first uplink frequency domain resource, a first downlink frequency domain resource, and a second uplink frequency domain resource. A frequency of the first uplink frequency domain resource may be lower than a frequency of the first downlink frequency domain resource, and a frequency of the second uplink frequency domain resource may be higher than the frequency of the first downlink frequency domain resource. Alternatively, a sequence number of any frequency domain resource block in the first uplink frequency domain resource may be less than a sequence number of any frequency domain resource block in the first downlink frequency domain resource, and a sequence number of any frequency domain resource block in the second uplink resource may be greater than the sequence number of any frequency domain resource block in the downlink frequency domain resource. A quantity of frequency domain resource blocks in the first uplink frequency domain resource may be equal to a quantity of frequency domain resource blocks in the second uplink frequency domain resource. A difference between a maximum frequency of the first uplink frequency domain resource and a minimum frequency of the first downlink frequency domain resource may be equal to a difference between a maximum frequency of the first downlink frequency domain resource and a minimum frequency of the second uplink frequency domain resource. A subcarrier spacing used for measurement may be a predefined subcarrier spacing.

It should be understood that when the quantity of frequency domain resource blocks in the first uplink frequency domain resource is equal to the quantity of frequency domain resource blocks in the second uplink frequency domain resource, the first indication information may indicate only the quantity of frequency domain resource blocks in the first uplink frequency domain resource or the quantity of frequency domain resource blocks in the second uplink frequency domain resource, and the terminal device can determine the quantity of frequency domain resource blocks in the first uplink frequency domain resource and the quantity of frequency domain resource blocks in the second uplink frequency domain resource, so that signaling overheads can be reduced.

The difference between the maximum frequency of the first uplink frequency domain resource and the minimum frequency of the first downlink frequency domain resource is equal to the difference between the maximum frequency of the first downlink frequency domain resource and the minimum frequency of the second uplink frequency domain resource. This may be understood as that a frequency domain spacing between the first uplink frequency domain resource and the first downlink frequency domain resource is equal to a frequency domain spacing between the second uplink frequency domain resource and the first downlink frequency domain resource. To be specific, the first uplink frequency domain resource and the second uplink frequency domain resource are symmetric with respect to the center frequency of the first downlink frequency domain resource, and the center frequency of the first downlink frequency domain resource is a median between a frequency of a subcarrier with a lowest frequency in the first uplink frequency domain resource and a frequency of a subcarrier with a highest frequency in the second uplink frequency domain resource. Optionally, the center frequency of the first downlink frequency domain resource may be a center frequency of the carrier.

Optionally, the first indication information may directly indicate the frequency domain resource configuration pattern. Specifically, the first indication information may directly indicate the first uplink frequency domain resource, the second uplink frequency domain resource, and the first downlink frequency domain resource. A manner in which the first indication information directly indicates the first uplink frequency domain resource, the first downlink frequency domain resource, and the second uplink frequency domain resource includes: The first indication information separately indicates sequence numbers of resource blocks included in the first uplink frequency domain resource, the first downlink frequency domain resource, and the second uplink frequency domain resource on the carrier; or the first indication information separately indicates resource blocks with smallest sequence numbers and resource blocks with largest sequence numbers in the first uplink frequency domain resource, the first downlink frequency domain resource, and the second uplink frequency domain resource on the carrier; or the first indication information separately indicates resource blocks with smallest sequence numbers and quantities of included resource blocks in the first downlink frequency domain resource, the first uplink frequency domain resource, and the second uplink frequency domain resource on the carrier; or the like.

Alternatively, the first indication information may indicate the frequency domain resource configuration pattern by using an index. An index value indicated by the first indication information may be in a one-to-one correspondence with a frequency domain resource configuration pattern of uplink and downlink frequency domain resources. Specifically, the first indication information indicates the first uplink frequency domain resource, the second uplink frequency domain resource, and the first downlink frequency domain resource by using an index value.

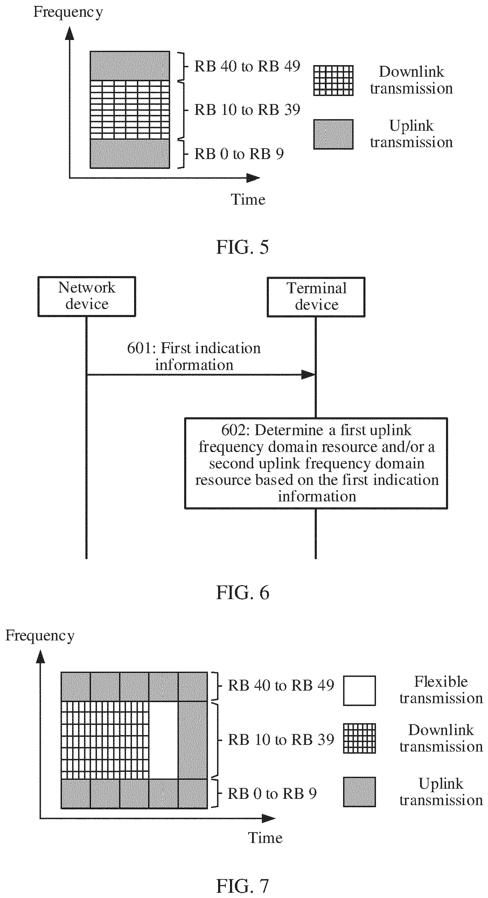

For example, the first indication information may sequentially indicate that X contiguous frequency domain resource blocks are used for uplink communication, Y contiguous frequency domain resource blocks are used for downlink communication, and Z contiguous frequency domain resource blocks are used for uplink communication, where a total quantity (X+Y+Z) of frequency domain resource blocks that can be indicated by the first indication information is not greater than a total quantity of frequency domain resource blocks in the carrier bandwidth of the terminal device, and X, Y, and Z each are not less than 0. For example, FIG. 5 is a schematic diagram of a frequency domain resource configuration according to an embodiment of this application. As shown in FIG. 5, it is assumed that the carrier bandwidth of the terminal device is 10 MHz, and includes 50 frequency domain resource blocks whose numbers may be RB 0 to RB 49. The network device may indicate, by using the first indication information, that X=10, Y=30, and Z=10, that is, indicate, to the terminal device, that in a current slot, 10 frequency domain resource blocks (RB 0 to RB 9) are an uplink transmission resource, 30 frequency domain resource blocks (RB 10 to RB 39) are a downlink transmission resource, and 10 frequency domain resource blocks (RB 40 to RB 49) are an uplink transmission resource.

The first indication information may directly indicate different frequency domain resource configuration patterns. For example, when the first indication information indicates the third frequency domain resource configuration pattern, it should be understood that the first indication information may alternatively indicate another frequency domain resource configuration pattern below.

In a possible implementation, the minimum frequency of the first uplink frequency domain resource may be a minimum frequency of the carrier, or may not be a minimum frequency of the carrier; and the maximum frequency of the second uplink frequency domain resource may be a maximum frequency of the carrier, or may not be a maximum frequency of the carrier.

The first indication information may include six fields. A first field may indicate a difference between a frequency of a subcarrier with a lowest frequency in the first uplink frequency domain resource and a frequency of a subcarrier with a lowest frequency on the carrier, or a difference between a sequence number of a resource block with a smallest sequence number in the first uplink frequency domain resource and a sequence number of a resource block with a smallest sequence number on the carrier. A second field may indicate a quantity of frequency domain resource blocks in the first uplink frequency domain resource. A third field may indicate a first frequency domain spacing, or a difference between a frequency of a subcarrier with a lowest frequency in the first downlink frequency domain resource and the frequency of the subcarrier with the lowest frequency on the carrier, or a difference between a sequence number of a resource block with a smallest sequence number in the first downlink frequency domain resource and the sequence number of the resource block with the smallest sequence number on the carrier. A fourth field may indicate a quantity of frequency domain resource blocks in the first downlink frequency domain resource. A fifth field may indicate a second frequency domain spacing, or a difference between a frequency of a subcarrier with a lowest frequency in the second uplink frequency domain resource and the frequency of the subcarrier with the lowest frequency on the carrier, or a difference between a sequence number of a resource block with a smallest sequence number in the second uplink frequency domain resource and the sequence number of the resource block with the smallest sequence number on the carrier. A sixth field may indicate a quantity of frequency domain resource blocks in the second uplink frequency domain resource. The first frequency domain spacing may be a quantity of frequency domain resource blocks between a frequency domain resource block with a largest sequence number in the first uplink frequency domain resource and a frequency domain resource block with a smallest sequence number in the first downlink frequency domain resource. The second frequency domain spacing may be a quantity of frequency domain resource blocks between a frequency domain resource block with a largest sequence number in the first downlink frequency domain resource and a frequency domain resource block with a smallest sequence number in the second uplink frequency domain resource. It should be understood that the first frequency domain spacing and the second frequency domain spacing each may be 0.

In another possible implementation, the minimum frequency of the first uplink frequency domain resource is a minimum frequency of the carrier, and the maximum frequency of the second uplink frequency domain resource is a maximum frequency of the carrier. The first indication information may include four fields. A first field may indicate a quantity of frequency domain resource blocks in the first uplink frequency domain resource. A second field may indicate a first frequency domain spacing, or a difference between a frequency of a subcarrier with a lowest frequency in the first downlink frequency domain resource and a frequency of a subcarrier with a lowest frequency on the carrier, or a difference between a sequence number of a resource block with a smallest sequence number in the first downlink frequency domain resource and a sequence number of a resource block with a smallest sequence number on the carrier. A third field may indicate a second frequency domain spacing, or a difference between a frequency of a subcarrier with a lowest frequency in the second uplink frequency domain resource and the frequency of the subcarrier with the lowest frequency on the carrier, or a difference between a sequence number of a resource block with a smallest sequence number in the second uplink frequency domain resource and the sequence number of the resource block with the smallest sequence number on the carrier. A fourth field may indicate a quantity of frequency domain resource blocks in the second uplink frequency domain resource. The first frequency domain spacing may be a quantity of frequency domain resource blocks between a frequency domain resource block with a largest sequence number in the first uplink frequency domain resource and a frequency domain resource block with a smallest sequence number in the first downlink frequency domain resource. The second frequency domain spacing may be a quantity of frequency domain resource blocks between a frequency domain resource block with a largest sequence number in the first downlink frequency domain resource and a frequency domain resource block with a smallest sequence number in the second uplink frequency domain resource. It should be understood that the first frequency domain spacing and the second frequency domain spacing each may be 0.

Optionally, when the first indication information indicates the fourth frequency domain resource configuration pattern, it should be understood that the first indication information may alternatively indicate another frequency domain resource configuration pattern below.

In a possible implementation, the minimum frequency of the first uplink frequency domain resource is a minimum frequency of the carrier, and the maximum frequency of the second uplink frequency domain resource is a maximum frequency of the carrier. Because the frequency domain resource configuration pattern is a pattern that is symmetric with respect to the center frequency of the first downlink frequency domain resource, it may be determined that the center frequency of the first downlink frequency domain resource is a center frequency of the carrier. The first indication information may include two fields. A first field may indicate a quantity of frequency domain resource blocks in the first uplink frequency domain resource, and a second field may indicate a first frequency domain spacing. Alternatively, a first field may indicate a quantity of frequency domain resource blocks in the first uplink frequency domain resource, and a second field may indicate a quantity of frequency domain resource blocks in the first downlink frequency domain resource. Alternatively, a first field may indicate a quantity of frequency domain resource blocks in the first downlink frequency domain resource, and a second field may indicate a first frequency domain spacing. The first frequency domain spacing may be 0. It should be understood that the first frequency domain spacing may indicate a quantity of frequency domain resource blocks between a frequency domain resource block with a largest sequence number in the first uplink frequency domain resource and a frequency domain resource block with a smallest sequence number in the first downlink frequency domain resource, and a quantity of frequency domain resource blocks between a frequency domain resource block with a largest sequence number in the first downlink frequency domain resource and a frequency domain resource block with a smallest sequence number in the second uplink frequency domain resource.

In another possible implementation, the minimum frequency of the first uplink frequency domain resource is not a minimum frequency of the carrier, and the maximum frequency of the second uplink frequency domain resource is not a maximum frequency of the carrier.

Optionally, the center frequency of the first downlink frequency domain resource is a center frequency of the carrier. The first indication information may include three fields. A first field may indicate a quantity of frequency domain resource blocks in the first uplink frequency domain resource, a second field may indicate a first frequency domain spacing, and a third field may indicate a quantity of frequency domain resource blocks in the first downlink frequency domain resource. The first frequency domain spacing may be 0. It should be understood that the first frequency domain spacing may indicate a quantity of frequency domain resource blocks between a frequency domain resource block with a largest sequence number in the first uplink frequency domain resource and a frequency domain resource block with a smallest sequence number in the first downlink frequency domain resource, and a quantity of frequency domain resource blocks between a frequency domain resource block with a largest sequence number in the first downlink frequency domain resource and a frequency domain resource block with a smallest sequence number in the second uplink frequency domain resource.

Optionally, the center frequency of the first downlink frequency domain resource is not a center frequency of the carrier. The first indication information may include four fields. A first field may indicate a difference between the minimum frequency of the first uplink frequency domain resource or a sequence number of a resource block with a smallest sequence number in the first uplink frequency domain resource and the minimum frequency of the carrier or a sequence number of a resource block with a smallest sequence number on the carrier. A second field may indicate a quantity of frequency domain resource blocks in the first uplink frequency domain resource. A third field may indicate a first frequency domain spacing. A fourth field may indicate a quantity of frequency domain resource blocks in the first downlink frequency domain resource. The first frequency domain spacing may be 0. It should be understood that the first frequency domain spacing may indicate a quantity of frequency domain resource blocks between a frequency domain resource block with a largest sequence number in the first uplink frequency domain resource and a frequency domain resource block with a smallest sequence number in the first downlink frequency domain resource, and a quantity of frequency domain resource blocks between a frequency domain resource block with a largest sequence number in the first downlink frequency domain resource and a frequency domain resource block with a smallest sequence number in the second uplink frequency domain resource.

The first indication information may be carried in cell-specific signaling and sent to the terminal device. For example, the first indication information is carried in cell-specific semi-static uplink-downlink common configuration information. Further, the first indication information may be transmitted by using a physical downlink shared channel (physical downlink shared channel, PDSCH). In this way, signaling overheads can be reduced.

402: The terminal device determines the uplink frequency domain resource and the downlink frequency domain resource based on the first indication information.

After receiving the first indication information, the terminal device may determine the uplink frequency domain resource and the downlink frequency domain resource based on the first indication information.

Optionally, the terminal device may determine the first uplink frequency domain resource, the second uplink frequency domain resource, and the first downlink frequency domain resource on the carrier in the first time period based on the first indication information. Details are as follows.

If the first indication information received by the terminal device directly indicates the frequency domain resource configuration pattern, that is, the first indication information directly indicates the first uplink frequency domain resource, the second uplink frequency domain resource, and the first downlink frequency domain resource, for example, when the first indication information indicates the third frequency domain resource configuration pattern, there may be the following possible implementations.

In a possible implementation, the minimum frequency of the first uplink frequency domain resource may be a minimum frequency of the carrier, or may not be a minimum frequency of the carrier; and the maximum frequency of the second uplink frequency domain resource may be a maximum frequency of the carrier, or may not be a maximum frequency of the carrier. The terminal device may determine an offset of the minimum frequency of the first uplink frequency domain resource or a resource block with a smallest sequence number in the first uplink frequency domain resource relative to the minimum frequency of the carrier or a resource block with a smallest sequence number on the carrier based on a first field in the first indication information, determine a quantity of frequency domain resource blocks in the first uplink frequency domain resource based on a second field, determine a first frequency domain spacing based on a third field, determine a quantity of frequency domain resource blocks in the first downlink frequency domain resource based on a fourth field, determine a second frequency domain spacing based on a fifth field, and determine a quantity of frequency domain resource blocks in the second uplink frequency domain resource based on a sixth field. An example is as follows.

**Table 1**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 0, 0, 50, 0, 0} | \ | 0 to 49 | \ |
| { 0, 4, 0, 42, 0, 4 } | 0 to 3 | 4 to 45 | 46 to 49 |
| {0, 4, 1, 40, 1,4} | 0 to 3 | 5 to 44 | 46 to 49 |
| {1, 4, 1, 40, 1, 3} | 1 to 4 | 6 to 45 | 47 to 49 |
| { 1, 4, 1, 30, 1, 3 } | 1 to 4 | 6 to 34 | 37 to 39 |
| {1, 4, 2, 30, 1,3} | 1 to 4 | 7 to 36 | 38 to 40 |
| ... | ... | ... | ... |

As shown in Table 1, it is assumed that the carrier bandwidth of the terminal device is 10 MHz, and includes 50 frequency domain resource blocks numbered RB 0 to RB 49. The first indication information may include six fields. A first field may indicate a difference between a frequency of a subcarrier with a lowest frequency in the first uplink frequency domain resource and a frequency of a subcarrier with a lowest frequency on the carrier, or a difference between a sequence number of a resource block with a smallest sequence number in the first uplink frequency domain resource and a sequence number of a resource block with a smallest sequence number on the carrier. A second field may indicate a quantity of frequency domain resource blocks in the first uplink frequency domain resource. A third field may indicate a first frequency domain spacing, or a difference between a frequency of a subcarrier with a lowest frequency in the first downlink frequency domain resource and the frequency of the subcarrier with the lowest frequency on the carrier, or a difference between a sequence number of a resource block with a smallest sequence number in the first downlink frequency domain resource and the sequence number of the resource block with the smallest sequence number on the carrier. A fourth field may indicate a quantity of frequency domain resource blocks in the first downlink frequency domain resource. A fifth field may indicate a second frequency domain spacing, or a difference between a frequency of a subcarrier with a lowest frequency in the second uplink frequency domain resource and the frequency of the subcarrier with the lowest frequency on the carrier, or a difference between a sequence number of a resource block with a smallest sequence number in the second uplink frequency domain resource and the sequence number of the resource block with the smallest sequence number on the carrier. A sixth field may indicate a quantity of frequency domain resource blocks in the second uplink frequency domain resource. When the first indication information sent by the network device to the terminal device is {0, 0, 0, 50, 0, 0}, it may indicate that the first indication information indicates, to the terminal device, that RB 0 to RB 49 are used for downlink communication. When the first indication information is {0, 4, 0, 42, 0, 4}, it may indicate that the first indication information indicates, to the terminal device, that a smallest sequence number of a frequency domain block in the first uplink frequency domain resource is RB 0, RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When the first indication information is {0, 4, 1, 40, 1, 4), it may indicate that the first indication information indicates, to the terminal device, that a smallest sequence number of a frequency domain block in the first uplink frequency domain resource is RB 0, RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. When the first indication information is { 1, 4, 1, 40, 1, 3}, it may indicate that the first indication information indicates, to the terminal device, that a smallest sequence number of a frequency domain block in the first uplink frequency domain resource is RB 1, RB 1 to RB 4 are used for first uplink communication, RB 6 to RB 45 are used for downlink communication, RB 47 to RB 49 are used for second uplink communication, the first frequency domain spacing is 1, and the second frequency domain spacing is 1, that is, there is one frequency domain resource block between RB 4 and RB 6, and there is one frequency domain resource block between RB 45 and RB 47. When the first indication information is {1, 4, 1, 30, 1, 3), it may indicate that the first indication information indicates, to the terminal device, that a smallest sequence number of a frequency domain block in the first uplink frequency domain resource is RB 1, RB 1 to RB 4 are used for first uplink communication, RB 6 to RB 35 are used for downlink communication, RB 37 to RB 39 are used for second uplink communication, the first frequency domain spacing is 1, and the second frequency domain spacing is 1, that is, there is one frequency domain resource block between RB 4 and RB 6, and there is one frequency domain resource block between RB 35 and RB 37. When the first indication information is {1, 4, 2, 30, 1, 3}, it may indicate that the first indication information indicates, to the terminal device, that a smallest sequence number of a frequency domain block in the first uplink frequency domain resource is RB 1, RB 1 to RB 4 are used for first uplink communication, RB 7 to RB 36 are used for downlink communication, RB 38 to RB 40are used for second uplink communication, the first frequency domain spacing is 2, and the second frequency domain spacing is 1, that is, there are two frequency domain resource blocks between RB 4 and RB 7, and there is one frequency domain resource block between RB 36 and RB 38. It should be understood that the foregoing example is merely for description, and is not intended to limit embodiments of this application.

In another possible implementation, the minimum frequency of the first uplink frequency domain resource is a minimum frequency of the carrier, and the maximum frequency of the second uplink frequency domain resource is a maximum frequency of the carrier. The terminal device may determine a quantity of frequency domain resource blocks in the first uplink frequency domain resource based on a first field in the first indication information, determine a first frequency domain spacing based on a second field, determine a second frequency domain spacing based on a third field, and determine a quantity of frequency domain resource blocks in the second uplink frequency domain resource based on a fourth field. An example is as follows.

**Table 2**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 0, 0, 0} | \ | 0 to 49 | \ |
| {4, 1, 1, 4} | 0 to 3 | 5 to 44 | 46 to 49 |
| {4, 0, 0, 4} | 0 to 3 | 4 to 45 | 46 to 49 |
| {2, 1, 1, 4} | 0 to 1 | 3 to 44 | 46 to 49 |
| {2, 1, 2, 4} | 0 to 1 | 3 to 43 | 46 to 49 |
| {2, 1, 2, 3} | 0 to 1 | 3 to 44 | 47 to 49 |
| ... | ... | ... | ... |

As shown in Table 2, it is assumed that the carrier bandwidth of the terminal device is 10 MHz, and includes 50 frequency domain resource blocks numbered RB 0 to RB 49. In this case, a smallest sequence number of a frequency domain block in the first uplink frequency domain resource is RB 0, and a largest sequence number of a frequency domain block in the second uplink frequency domain resource is RB 49. The first indication information may include four fields. A first field may indicate a quantity of frequency domain resource blocks in the first uplink frequency domain resource. A second field may indicate a first frequency domain spacing, or a difference between a frequency of a subcarrier with a lowest frequency in the first downlink frequency domain resource and a frequency of a subcarrier with a lowest frequency on the carrier, or a difference between a sequence number of a resource block with a smallest sequence number in the first downlink frequency domain resource and a sequence number of a resource block with a smallest sequence number on the carrier. A third field may indicate a second frequency domain spacing, or a difference between a frequency of a subcarrier with a lowest frequency in the second uplink frequency domain resource and the frequency of the subcarrier with the lowest frequency on the carrier, or a difference between a sequence number of a resource block with a smallest sequence number in the second uplink frequency domain resource and the sequence number of the resource block with the smallest sequence number on the carrier. A fourth field may indicate a quantity of frequency domain resource blocks in the second uplink frequency domain resource. When the first indication information sent by the network device to the terminal device is {0, 0, 0, 0}, it may indicate that the first indication information indicates, to the terminal device, that RB 0 to RB 49 are used for downlink communication. When the first indication information is {4, 1, 1, 4}, it may indicate that the first indication information indicates, to the terminal device, that RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 3 and RB 5), and a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 44 and RB 46). When the first indication information is {4, 0, 0, 4}, it may indicate that the first indication information indicates, to the terminal device, that RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, there are zero frequency domain resource blocks between RB 3 and RB 4, and there are zero frequency domain resource blocks between RB 45 and RB 46. When the first indication information is {2, 1, 1, 4}, it may indicate that the first indication information indicates, to the terminal device, that RB 0 and RB 1 are used for first uplink communication, RB 3 to RB 44 are used for downlink communication, RB 46 to RB 49 are used for second uplink communication, the first frequency domain spacing is 1, and the second frequency domain spacing is 1, that is, there is one frequency domain resource block between RB 1 and RB 3, and there is one frequency domain resource block between RB 44 and RB 46. When the first indication information is 12, 1, 2, 4), it may indicate that the first indication information indicates, to the terminal device, that RB 0 and RB 1 are used for first uplink communication, RB 3 to RB 43 are used for downlink communication, RB 46 to RB 49 are used for second uplink communication, the first frequency domain spacing is 1, and the second frequency domain spacing is 2, that is, there is one frequency domain resource block between RB 1 and RB 3, and there are two frequency domain resource blocks between RB 43 and RB 46. When the first indication information is {2, 1, 2, 3}, it may indicate that the first indication information indicates, to the terminal device, that RB 0 and RB 1 are used for first uplink communication, RB 3 to RB 44 are used for downlink communication, RB 47 to RB 49 are used for second uplink communication, the first frequency domain spacing is 1, and the second frequency domain spacing is 2, that is, there is one frequency domain resource block between RB 1 and RB 3, and there are two frequency domain resource blocks between RB 43 and RB 46. It should be understood that the foregoing example is merely for description, and is not intended to limit embodiments of this application.

If the first indication information received by the terminal device directly indicates the frequency domain resource configuration pattern, for example, when the first indication information indicates the fourth frequency domain resource configuration pattern, there may be the following possible implementations.

In a possible implementation, the minimum frequency of the first uplink frequency domain resource is a minimum frequency of the carrier, and the maximum frequency of the second uplink frequency domain resource is a maximum frequency of the carrier.

The terminal device may determine a quantity of frequency domain resource blocks in the first uplink frequency domain resource based on a first field in the first indication information, and determine a first frequency domain spacing based on a second field. An example is as follows.

**Table 3**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 0} | \ | 0 to 49 | \ |
| {4, 0} | 0 to 3 | 4 to 45 | 46 to 49 |
| {4, 1} | 0 to 3 | 5 to 44 | 46 to 49 |
| ... | ... | ... | ... |

As shown in Table 3, it is assumed that the carrier bandwidth of the terminal device is 10 MHz, and includes 50 frequency domain resource blocks numbered RB 0 to RB 49. The first indication information may include two fields. A first field may indicate a quantity of frequency domain resource blocks in the first uplink frequency domain resource, and a second field may indicate a first frequency domain spacing. When the first indication information sent by the network device to the terminal device is {0, 0}, it may indicate that the first indication information indicates, to the terminal device, that RB 0 to RB 49 are used for downlink communication. When the first indication information is (4, 0), it may indicate that the first indication information indicates, to the terminal device, that RB 0 to RB 3 are used for first uplink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). In this case, RB 4 to RB 45 are used for downlink communication. When the first indication information is {4, 1}, it may indicate that the first indication information indicates, to the terminal device, that RB 0 to RB 3 are used for first uplink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. In this case, RB 5 to RB 44 are used for downlink communication. It should be understood that the foregoing example is merely for description, and is not intended to limit embodiments of this application.

Optionally, the terminal device may determine a quantity of frequency domain resource blocks in the first uplink frequency domain resource based on a first field in the first indication information, and determine a quantity of frequency domain resource blocks in the first downlink frequency domain resource based on a second field. An example is as follows.

**Table 4**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 50} | \ | 0 to 49 | \ |
| {4, 42} | 0 to 3 | 4 to 45 | 46 to 49 |
| {4, 40} | 0 to 3 | 5 to 44 | 46 to 49 |
| ... | ... | ... | ... |

As shown in Table 4, it is assumed that the carrier bandwidth of the terminal device is 10 MHz, and includes 50 frequency domain resource blocks numbered RB 0 to RB 49. The first indication information may include two fields. A first field may indicate a quantity of frequency domain resource blocks in the first uplink frequency domain resource, and a second field may indicate a quantity of frequency domain resource blocks in the first downlink frequency domain resource. When the first indication information sent by the network device to the terminal device is {0, 50}, it may indicate that the first indication information indicates, to the terminal device, that RB 0 to RB 49 are used for downlink communication. When the first indication information is {4, 42}, it may indicate that the first indication information indicates, to the terminal device, that RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When the first indication information is {4, 40}, it may indicate that the first indication information indicates, to the terminal device, that RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. It should be understood that the foregoing example is merely for description, and is not intended to limit embodiments of this application.

Optionally, the terminal device may determine a quantity of frequency domain resource blocks in the first downlink frequency domain resource based on a first field in the first indication information, and determine a first frequency domain spacing based on a second field. An example is as follows.

**Table 5**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 0} | 0 to 24 | \ | 25 to 49 |
| {4, 0} | 0 to 22 | 23 to 26 | 27 to 49 |
| {4, 1} | 0 to 21 | 23 to 26 | 28 to 49 |
| ... | ... | ... | ... |

As shown in Table 5, it is assumed that the carrier bandwidth of the terminal device is 10 MHz, and includes 50 frequency domain resource blocks numbered RB 0 to RB 49. The first indication information may include two fields. A first field may indicate a quantity of frequency domain resource blocks in the first downlink frequency domain resource, and a second field may indicate a first frequency domain spacing. When the first indication information sent by the network device to the terminal device is {0, 0}, it may indicate that the first indication information indicates, to the terminal device, that RB 0 to RB 24 are used for first uplink communication and RB 25 to RB 49 are used for second uplink communication. When the first indication information is {4, 0}, it may indicate that the first indication information indicates, to the terminal device, that RB 0 to RB 22 are used for first uplink communication, RB 27 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 22 and RB 23), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 26 and RB 27). In this case, RB 23 to RB 26 are used for downlink communication. When the first indication information is {4, 1 }, it may indicate that the first indication information indicates, to the terminal device, that RB 0 to RB 21 are used for first uplink communication, RB 28 to RB 49 are used for second uplink communication, the first frequency domain spacing is 1, and the second frequency domain spacing is 1, that is, there is one frequency domain resource block between RB 21 and RB 23, and there is one frequency domain resource block between RB 26 and RB 28. In this case, RB 23 to RB 26 are used for downlink communication. It should be understood that the foregoing example is merely for description, and is not intended to limit embodiments of this application.

In another possible implementation, the minimum frequency of the first uplink frequency domain resource is not a minimum frequency of the carrier, and the maximum frequency of the second uplink frequency domain resource is not a maximum frequency of the carrier.

The center frequency of the first downlink frequency domain resource is a center frequency of the carrier. The terminal device may determine a quantity of frequency domain resource blocks in the first uplink frequency domain resource based on a first field in the first indication information, determine a first frequency domain spacing based on a second field, and determine a quantity of frequency domain resource blocks in the first downlink frequency domain resource based on a third field. An example is as follows.

**Table 6**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {4, 0, 42} | 0 to 3 | 4 to 45 | 46 to 49 |
| {4, 1, 40} | 0 to 3 | 5 to 44 | 46 to 49 |
| {4, 1, 4} | 18 to 21 | 23 to 26 | 28 to 31 |
| ... | ... | ... | ... |

As shown in Table 6, it is assumed that the carrier bandwidth of the terminal device is 10 MHz, and includes 50 frequency domain resource blocks numbered RB 0 to RB 49. The first indication information may include three fields. A first field may indicate a quantity of frequency domain resource blocks in the first uplink frequency domain resource, a second field may indicate a first frequency domain spacing, and a third field may indicate a quantity of frequency domain resource blocks in the first downlink frequency domain resource. When the first indication information sent by the network device to the terminal device is {4, 0, 42}, it may indicate that the first indication information indicates, to the terminal device, that RB 0 to RB 3 are used for first uplink communication, the first frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), RB 4 to RB 45 are used for downlink communication, the second frequency domain spacing is 0, that is, a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46), and RB 46 to RB 49 are used for second uplink communication. When the first indication information is {4, 1, 40}, it may indicate that the first indication information indicates, to the terminal device, that RB 0 to RB 3 are used for first uplink communication, the first frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 3 and RB 5), RB 5 to RB 44 are used for downlink communication, the second frequency domain spacing is 1, that is, a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 44 and RB 46), and RB 46 to RB 49 are used for second uplink communication. When the first indication information is {4, 1, 4}, it may indicate that the first indication information indicates, to the terminal device, that RB 18 to RB 21 are used for first uplink communication, the first frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 21 and RB 23), RB 23 to RB 26 are used for downlink communication, the second frequency domain spacing is 1, that is, a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 26 and RB 28), and RB 28 to RB 31 are used for second uplink communication. It should be understood that the foregoing example is merely for description, and is not intended to limit embodiments of this application.

Optionally, the center frequency of the first downlink frequency domain resource is not a center frequency of the carrier. The terminal device may determine an offset of the minimum frequency of the first uplink frequency domain resource relative to the minimum frequency of the carrier or a resource block with a smallest sequence number on the carrier based on a first field in the first indication information, determine a quantity of frequency domain resource blocks in the first uplink frequency domain resource based on a second field, determine a first frequency domain spacing based on a third field, and determine a quantity of frequency domain resource blocks in the first downlink frequency domain resource based on a fourth field. An example is as follows.

**Table 7**

| First indication information | Sequence number of a frequency domain resource block used for first uplink communication | Sequence number of a frequency domain resource block used for downlink communication | Sequence number of a frequency domain resource block used for second uplink communication |
|---|---|---|---|
| {0, 0, 0, 50} | \ | 0 to 49 | \ |
| {0, 4, 0, 42} | 0 to 3 | 4 to 45 | 46 to 49 |
| {0, 4, 1, 40} | 0 to 3 | 5 to 44 | 46 to 49 |
| {1, 4, 1, 40} | 1 to 4 | 6 to 45 | 47 to 49 |
| {1, 4, 1, 30} | 1 to 4 | 6 to 34 | 37 to 39 |
| {1, 4, 2, 30} | 1 to 4 | 7 to 36 | 39 to 42 |
| ... | ... | ... | ... |

As shown in Table 7, it is assumed that the carrier bandwidth of the terminal device is 10 MHz, and includes 50 frequency domain resource blocks numbered RB 0 to RB 49. The first indication information may include four fields. A first field may indicate an offset of the minimum frequency of the first uplink frequency domain resource relative to the minimum frequency of the carrier or a resource block with a smallest sequence number on the carrier. A second field may indicate a quantity of frequency domain resource blocks in the first uplink frequency domain resource. A third field may indicate a first frequency domain spacing. A fourth field may indicate a quantity of frequency domain resource blocks in the first downlink frequency domain resource. When the first indication information sent by the network device to the terminal device is {0, 0, 0, 50}, it may indicate that the first indication information indicates, to the terminal device, that RB 0 to RB 49 are used for downlink communication. When the first indication information is {0, 4, 0, 42}, it may indicate that the first indication information indicates, to the terminal device, that a smallest sequence number of a frequency domain block in the first uplink frequency domain resource is RB 0, RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When the first indication information is {0, 4, 1, 40}, it may indicate that the first indication information indicates, to the terminal device, that a smallest sequence number of a frequency domain block in the first uplink frequency domain resource is RB 0, RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. When the first indication information is {1, 4, 1, 40}, it may indicate that the first indication information indicates, to the terminal device, that a smallest sequence number of a frequency domain block in the first uplink frequency domain resource is RB 1, RB 1 to RB 4 are used for first uplink communication, RB 6 to RB 45 are used for downlink communication, RB 47 to RB 49 are used for second uplink communication, the first frequency domain spacing is 1, and the second frequency domain spacing is 1, that is, there is one frequency domain resource block between RB 4 and RB 6, and there is one frequency domain resource block between RB 45 and RB 47. When the first indication information is {1, 4, 1, 30}, it may indicate that the first indication information indicates, to the terminal device, that a smallest sequence number of a frequency domain block in the first uplink frequency domain resource is RB 1, RB 1 to RB 4 are used for first uplink communication, RB 6 to RB 35 are used for downlink communication, RB 37 to RB 39 are used for second uplink communication, the first frequency domain spacing is 1, and the second frequency domain spacing is 1, that is, there is one frequency domain resource block between RB 4 and RB 6, and there is one frequency domain resource block between RB 35 and RB 37. When the first indication information is {1, 4, 2, 30}, it may indicate that the first indication information indicates, to the terminal device, that a smallest sequence number of a frequency domain block in the first uplink frequency domain resource is RB 1, RB 1 to RB 4 are used for first uplink communication, RB 7 to RB 36 are used for downlink communication, RB 39 to RB 42 are used for second uplink communication, the first frequency domain spacing is 2, and the second frequency domain spacing is 2, that is, there are two frequency domain resource blocks between RB 4 and RB 7, and there are two frequency domain resource blocks between RB 36 and RB 39. It should be understood that the foregoing example is merely for description, and is not intended to limit embodiments of this application.

If the first indication information received by the terminal device is an index value, the terminal device may determine, based on the index value, a frequency domain resource configuration pattern corresponding to the index value, and then determine the first uplink frequency domain resource, the second uplink frequency domain resource, and the first downlink frequency domain resource on the carrier in the first time period based on the corresponding frequency domain resource configuration pattern. An index value may be in a one-to-one correspondence with a frequency domain resource configuration pattern, and the correspondence may be preset by the terminal device, or may be set by the network device and then sent to the terminal device. This is not limited in this application.

If the first indication information received by the terminal device is an index value, for example, when the first indication information indicates the third frequency domain resource configuration pattern, there may be the following possible implementations.

In a possible implementation, the minimum frequency of the first uplink frequency domain resource may be a minimum frequency of the carrier, or may not be a minimum frequency of the carrier; and the maximum frequency of the second uplink frequency domain resource may be a maximum frequency of the carrier, or may not be a maximum frequency of the carrier. An example is as follows.

**Table 8**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 0, 0, 50, 0, 0} | \ | 0 to 49 | \ |
| 1 | { 0, 4, 0, 42, 0, 4 } | 0 to 3 | 4 to 45 | 46 to 49 |
| 2 | { 0, 4, 1, 40, 1, 4 } | 0 to 3 | 5 to 44 | 46 to 49 |
| 3 | { 1, 4, 1, 40, 1, 3 } | 1 to 4 | 6 to 45 | 47 to 49 |
| 4 | {1, 4, 1, 30, 1, 3) | 1 to 4 | 6 to 34 | 37 to 39 |
| 5 | (1, 4, 2, 30, 1, 3) | 1 to 4 | 7 to 36 | 38 to 40 |
| ... | ... | ... | ... | ... |

As shown in Table 8, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {0, 0, 0, 50, 0, 0}, and it may indicate that the first indication information indicates, to the terminal device, that RB 0 to RB 49 are used for downlink communication. When an index value indicated by the first indication information is 1, the terminal device may determine that a frequency domain resource configuration pattern corresponding to the index value 1 is {0, 4, 0, 42, 0, 4}, and it may indicate that the first indication information indicates, to the terminal device, that a smallest sequence number of a frequency domain block in the first uplink frequency domain resource is RB 0, RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 1 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When an index value indicated by the first indication information is 2, the terminal device may determine that a frequency domain resource configuration pattern corresponding to the index value 2 is {0, 4, 1, 40, 1, 4}, and it may indicate that the first indication information indicates, to the terminal device, that a smallest sequence number of a frequency domain block in the first uplink frequency domain resource is RB 0, RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. When an index value indicated by the first indication information is 3, the terminal device may determine that a frequency domain resource configuration pattern corresponding to the index value 3 is {1, 4, 1, 40, 1, 3), and it may indicate that the first indication information indicates, to the terminal device, that a smallest sequence number of a frequency domain block in the first uplink frequency domain resource is RB 1, RB 1 to RB 4 are used for first uplink communication, RB 6 to RB 45 are used for downlink communication, RB 47 to RB 49 are used for second uplink communication, the first frequency domain spacing is 1, and the second frequency domain spacing is 1, that is, there is one frequency domain resource block between RB 4 and RB 6, and there is one frequency domain resource block between RB 45 and RB 47. When an index value indicated by the first indication information is 4, the terminal device may determine that a frequency domain resource configuration pattern corresponding to the index value 4 is {1, 4, 1, 30, 1, 3}, and it may indicate that the first indication information indicates, to the terminal device, that a smallest sequence number of a frequency domain block in the first uplink frequency domain resource is RB 1, RB 1 to RB 4 are used for first uplink communication, RB 6 to RB 35 are used for downlink communication, RB 37 to RB 39 are used for second uplink communication, the first frequency domain spacing is 1, and the second frequency domain spacing is 1, that is, there is one frequency domain resource block between RB 4 and RB 6, and there is one frequency domain resource block between RB 35 and RB 37. When an index value indicated by the first indication information is 5, the terminal device may determine that a frequency domain resource configuration pattern corresponding to the index value 5 is {1, 4, 2, 30, 1, 3), and it may indicate that the first indication information indicates, to the terminal device, that a smallest sequence number of a frequency domain block in the first uplink frequency domain resource is RB 1, RB 1 to RB 4 are used for first uplink communication, RB 7 to RB 36 are used for downlink communication, RB 38 to RB 40 are used for second uplink communication, the first frequency domain spacing is 2, and the second frequency domain spacing is 1, that is, there is two frequency domain resource block between RB 4 and RB 7, and there is one frequency domain resource block between RB 36 and RB 38. It should be understood that the foregoing example is merely for description, and is not intended to limit embodiments of this application.

In another possible implementation, the minimum frequency of the first uplink frequency domain resource is a minimum frequency of the carrier, and the maximum frequency of the second uplink frequency domain resource is a maximum frequency of the carrier. An example is as follows.

**Table 9**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 0, 0, 0) | \ | 0 to 49 | \ |
| 1 | {4, 1, 1, 4} | 0 to 3 | 5 to 44 | 46 to 49 |
| 2 | {4, 0, 0, 4} | 0 to 3 | 4 to 45 | 46 to 49 |
| 3 | {2, 1, 1, 4} | 0 to 1 | 3 to 44 | 46 to 49 |
| 4 | {2, 1, 2, 4} | 0 to 1 | 3 to 43 | 46 to 49 |
| 5 | {2, 1, 2, 3} | 0 to 1 | 3 to 44 | 47 to 49 |
| ... | ... | ... | ... | ... |

As shown in Table 9, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {0, 0, 0, 0), and it may indicate that the first indication information indicates, to the terminal device, that RB 0 to RB 49 are used for downlink communication. When an index value indicated by the first indication information is 1, the terminal device may determine that a frequency domain resource configuration pattern corresponding to the index value 1 is {4, 1, 1, 4}, and it may indicate that the first indication information indicates, to the terminal device, that RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 3 and RB 5), and a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 44 and RB 46). When an index value indicated by the first indication information is 2, the terminal device may determine that a frequency domain resource configuration pattern corresponding to the index value 2 is {4, 0, 0, 4), and it may indicate that the first indication information indicates, to the terminal device, that RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, there are zero frequency domain resource blocks between RB 3 and RB 4, and there are zero frequency domain resource blocks between RB 45 and RB 46. When an index value indicated by the first indication information is 3, the terminal device may determine that a frequency domain resource configuration pattern corresponding to the index value 3 is {2, 1, 1, 4}, and it may indicate that the first indication information indicates, to the terminal device, that RB 0 and RB 1 are used for first uplink communication, RB 3 to RB 44 are used for downlink communication, RB 46 to RB 49 are used for second uplink communication, the first frequency domain spacing is 1, and the second frequency domain spacing is 1, that is, there is one frequency domain resource block between RB 1 and RB 3, and there is one frequency domain resource block between RB 44 and RB 46. When an index value indicated by the first indication information is 4, the terminal device may determine that a frequency domain resource configuration pattern corresponding to the index value 4 is {2, 1, 2, 4}, and it may indicate that the first indication information indicates, to the terminal device, that RB 0 and RB 1 are used for first uplink communication, RB 3 to RB 43 are used for downlink communication, RB 46 to RB 49 are used for second uplink communication, the first frequency domain spacing is 1, and the second frequency domain spacing is 2, that is, there is one frequency domain resource block between RB 1 and RB 3, and there are two frequency domain resource blocks between RB 43 and RB 46. When an index value indicated by the first indication information is 5, the terminal device may determine that a frequency domain resource configuration pattern corresponding to the index value 5 is {2, 1, 2, 3}, and it may indicate that the first indication information indicates, to the terminal device, that RB 0 and RB 1 are used for first uplink communication, RB 3 to RB 44 are used for downlink communication, RB 47 to RB 49 are used for second uplink communication, the first frequency domain spacing is 1, and the second frequency domain spacing is 2, that is, there is one frequency domain resource block between RB 1 and RB 3, and there are two frequency domain resource blocks between RB 43 and RB 46. It should be understood that the foregoing example is merely for description, and is not intended to limit embodiments of this application.

If the first indication information received by the terminal device is an index value, for example, when the first indication information indicates the fourth frequency domain resource configuration pattern, there may be the following possible implementations.

In a possible implementation, the minimum frequency of the first uplink frequency domain resource is a minimum frequency of the carrier, and the maximum frequency of the second uplink frequency domain resource is a maximum frequency of the carrier.

An example is as follows.

**Table 10**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 0} | \ | 0 to 49 | \ |
| 1 | (4, 0} | 0 to 3 | 4 to 45 | 46 to 49 |
| 2 | {4, 1} | 0 to 3 | 5 to 44 | 46 to 49 |
| ... | ... | ... | ... | ... |

As shown in Table 10, it is assumed that the carrier bandwidth of the terminal device is 10 MHz, and includes 50 frequency domain resource blocks numbered RB 0 to RB 49. When the first indication information sent by the network device to the terminal device is {0, 0}, it may indicate that the first indication information indicates, to the terminal device, that RB 0 to RB 49 are used for downlink communication. When the first indication information is {4, 0}, it may indicate that the first indication information indicates, to the terminal device, that RB 0 to RB 3 are used for first uplink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). In this case, RB 4 to RB 45 are used for downlink communication. When the first indication information is {4, 1}, it may indicate that the first indication information indicates, to the terminal device, that RB 0 to RB 3 are used for first uplink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. In this case, RB 5 to RB 44 are used for downlink communication. It should be understood that the foregoing example is merely for description, and is not intended to limit embodiments of this application.

Optionally, an example is as follows.

**Table 11**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 50} | \ | 0 to 49 | \ |
| 1 | {4, 42} | 0 to 3 | 4 to 45 | 46 to 49 |
| 2 | {4, 40} | 0 to 3 | 5 to 44 | 46 to 49 |
| ... | ... | ... | ... | ... |

As shown in Table 11, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {0, 50}, and it may indicate that the first indication information indicates, to the terminal device, that RB 0 to RB 49 are used for downlink communication. When an index value indicated by the first indication information is 1, the terminal device may determine that a frequency domain resource configuration pattern corresponding to the index value 1 is {4, 42}, and it may indicate that the first indication information indicates, to the terminal device, that RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When an index value indicated by the first indication information is 2, the terminal device may determine that a frequency domain resource configuration pattern corresponding to the index value 2 is {4, 40}, and it may indicate that the first indication information indicates, to the terminal device, that RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. It should be understood that the foregoing example is merely for description, and is not intended to limit embodiments of this application.

Optionally, an example is as follows.

**Table 12**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 0} | 0 to 24 | \ | 25 to 49 |
| 1 | {4, 0} | 0 to 22 | 23 to 26 | 27 to 49 |
| 2 | {4, 1} | 0 to 21 | 23 to 26 | 28 to 49 |
| ... | ... | ... | ... | ... |

As shown in Table 12, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {0, 0}, and it may indicate that the first indication information indicates, to the terminal device, that RB 0 to RB 24 are used for first uplink communication and RB 25 to RB 49 are used for second uplink communication. When an index value indicated by the first indication information sent by the network device to the terminal device is 1, the terminal device may determine that a frequency domain resource configuration pattern corresponding to the index value 1 is {4, 0}, and it may indicate that the first indication information indicates, to the terminal device, that RB 0 to RB 22 are used for first uplink communication, RB 27 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 22 and RB 23), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 26 and RB 27). In this case, RB 23 to RB 26 are used for downlink communication. When an index value indicated by the first indication information sent by the network device to the terminal device is 2, the terminal device may determine that a frequency domain resource configuration pattern corresponding to the index value 2 is {4, 1}, and it may indicate that the first indication information indicates, to the terminal device, that RB 0 to RB 21 are used for first uplink communication, RB 28 to RB 49 are used for second uplink communication, the first frequency domain spacing is 1, and the second frequency domain spacing is 1, that is, there is one frequency domain resource block between RB 21 and RB 23, and there is one frequency domain resource block between RB 26 and RB 28. In this case, RB 23 to RB 26 are used for downlink communication. It should be understood that the foregoing example is merely for description, and is not intended to limit embodiments of this application.

In another possible implementation, the minimum frequency of the first uplink frequency domain resource is not a minimum frequency of the carrier, and the maximum frequency of the second uplink frequency domain resource is not a maximum frequency of the carrier.

The center frequency of the first downlink frequency domain resource is a center frequency of the carrier. An example is as follows.

**Table 13**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {4, 0, 42} | 0 to 3 | 4 to 45 | 46 to 49 |
| 1 | {4, 1, 40} | 0 to 3 | 5 to 44 | 46 to 49 |
| 2 | {4, 1, 4} | 18 to 21 | 23 to 26 | 28 to 31 |
| ... | ... | ... | ... | ... |

As shown in Table 13, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {4, 0, 42}, and it may indicate that the first indication information indicates, to the terminal device, that RB 0 to RB 3 are used for first uplink communication, the first frequency domain spacing is 0, that is, a quantity of frequency domain resource blocks between a frequency domain resource block with a largest sequence number that is used for first uplink communication and a frequency domain resource block with a smallest sequence number that is used for downlink communication is 0 (there are zero frequency domain resource blocks between RB 3 and RB 4), RB 4 to RB 45 are used for downlink communication, the second frequency domain spacing is 0, that is, a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46), and RB 46 to RB 49 are used for second uplink communication. When an index value indicated by the first indication information sent by the network device to the terminal device is 1, the terminal device may determine that a frequency domain resource configuration pattern corresponding to the index value 1 is {4, 1, 40}, and it may indicate that the first indication information indicates, to the terminal device, that RB 0 to RB 3 are used for first uplink communication, the first frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 3 and RB 5), RB 5 to RB 44 are used for downlink communication, the second frequency domain spacing is 1, that is, a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 44 and RB 46), and RB 46 to RB 49 are used for second uplink communication. When an index value indicated by the first indication information sent by the network device to the terminal device is 2, the terminal device may determine that a frequency domain resource configuration pattern corresponding to the index value 2 is {4, 1, 4}, and it may indicate that the first indication information indicates, to the terminal device, that RB 18 to RB 21 are used for first uplink communication, the first frequency domain spacing is 1, that is, a quantity of frequency domain resource blocks between a frequency domain resource block with a largest sequence number that is used for first uplink communication and a frequency domain resource block with a smallest sequence number that is used for downlink communication is 1 (there is one frequency domain resource block between RB 21 and RB 23), RB 23 to RB 26 are used for downlink communication, the second frequency domain spacing is 1, that is, a quantity of frequency domain resource blocks between a frequency domain resource block with a largest sequence number that is used for downlink communication and a frequency domain resource block with a smallest sequence number that is used for second uplink communication is 1 (there is one frequency domain resource block between RB 26 and RB 28), and RB 28 to RB 31 are used for second uplink communication. It should be understood that the foregoing example is merely for description, and is not intended to limit embodiments of this application.

Optionally, the center frequency of the first downlink frequency domain resource is not a center frequency of the carrier. An example is as follows.

**Table 14**

| First indication information | Frequency domain resource configuration pattern | Sequence number of a frequency domain resource block used for first uplink communication | Sequence number of a frequency domain resource block used for downlink communication | Sequence number of a frequency domain resource block used for second uplink communication |
|---|---|---|---|---|
| 0 | {0, 0, 0, 50} | \ | 0 to 49 | \ |
| 1 | {0, 4, 0, 42} | 0 to 3 | 4 to 45 | 46 to 49 |
| 2 | {0, 4, 1, 40} | 0 to 3 | 5 to 44 | 46 to 49 |
| 3 | {1, 4, 1, 40} | 1 to 4 | 6 to 45 | 47 to 49 |
| 4 | {1, 4, 1, 30} | 1 to 4 | 6 to 34 | 37 to 39 |
| 5 | {1, 4, 2, 30} | 1 to 4 | 7 to 36 | 39 to 42 |
| ... | ... | ... | ... | ... |

As shown in Table 14, it is assumed that the carrier bandwidth of the terminal device is 10 MHz, and includes 50 frequency domain resource blocks numbered RB 0 to RB 49. When an index value indicated by the first indication information sent by the network device to the terminal device is 0, the terminal device may determine that a frequency domain resource configuration pattern corresponding to the index value 0 is {0, 0, 0, 50}, and it may indicate that the first indication information indicates, to the terminal device, that RB 0 to RB 49 are used for downlink communication. When an index value indicated by the first indication information sent by the network device to the terminal device is 1, the terminal device may determine that a frequency domain resource configuration pattern corresponding to the index value 1 is {0, 4, 0, 42}, and it may indicate that the first indication information indicates, to the terminal device, that a smallest sequence number of a frequency domain block in the first uplink frequency domain resource is RB 0, RB 0 to RB 3 are used for first uplink communication, RB 4 to RB 45 are used for downlink communication, RB 46 to RB 49 are used for second uplink communication, the first frequency domain spacing is 0, and the second frequency domain spacing is 0, that is, a quantity of frequency domain resource blocks between a frequency domain resource block with a largest sequence number that is used for first uplink communication and a frequency domain resource block with a smallest sequence number that is used for downlink communication is 1 (there are zero frequency domain resource blocks between RB 3 and RB 4), and a quantity of frequency domain resource blocks between a frequency domain resource block with a largest sequence number that is used for downlink communication and a frequency domain resource block with a smallest sequence number that is used for second uplink communication is 0 (there are zero frequency domain resource blocks between RB 45 and RB 46). When an index value indicated by the first indication information sent by the network device to the terminal device is 2, the terminal device may determine that a frequency domain resource configuration pattern corresponding to the index value 2 is {0, 4, 1, 40}, and it may indicate that the first indication information indicates, to the terminal device, that a smallest sequence number of a frequency domain block in the first uplink frequency domain resource is RB 0, RB 0 to RB 3 are used for first uplink communication, RB 5 to RB 44 are used for downlink communication, RB 46 to RB 49 are used for second uplink communication, the first frequency domain spacing is 1, and the second frequency domain spacing is 1, that is, there is one frequency domain resource block between RB 3 and RB 5, and there is one frequency domain resource block between RB 44 and RB 46. When an index value indicated by the first indication information sent by the network device to the terminal device is 3, the terminal device may determine that a frequency domain resource configuration pattern corresponding to the index value 3 is {1, 4, 1, 40}, and it may indicate that the first indication information indicates, to the terminal device, that a smallest sequence number of a frequency domain block in the first uplink frequency domain resource is RB 1, RB 1 to RB 4 are used for first uplink communication, RB 6 to RB 45 are used for downlink communication, RB 47 to RB 49 are used for second uplink communication, the first frequency domain spacing is 1, and the second frequency domain spacing is 1, that is, there is one frequency domain resource block between RB 4 and RB 6, and there is one frequency domain resource block between RB 45 and RB 47. When an index value indicated by the first indication information sent by the network device to the terminal device is 4, the terminal device may determine that a frequency domain resource configuration pattern corresponding to the index value 4 is {1, 4, 1, 30}, and it may indicate that the first indication information indicates, to the terminal device, that a smallest sequence number of a frequency domain block in the first uplink frequency domain resource is RB 1, RB 1 to RB 4 are used for first uplink communication, RB 6 to RB 35 are used for downlink communication, RB 37 to RB 39 are used for second uplink communication, the first frequency domain spacing is 1, and the second frequency domain spacing is 1, that is, there is one frequency domain resource block between RB 4 and RB 6, and there is one frequency domain resource block between RB 35 and RB 37. When an index value indicated by the first indication information sent by the network device to the terminal device is 5, the terminal device may determine that a frequency domain resource configuration pattern corresponding to the index value 5 is {1, 4, 2, 30}, and it may indicate that the first indication information indicates, to the terminal device, that a smallest sequence number of a frequency domain block in the first uplink frequency domain resource is RB 1, RB 1 to RB 4 are used for first uplink communication, RB 7 to RB 36 are used for downlink communication, RB 39 to RB 42 are used for second uplink communication, the first frequency domain spacing is 2, and the second frequency domain spacing is 2, that is, there are two frequency domain resource blocks between RB 4 and RB 7, and there are two frequency domain resource blocks between RB 36 and RB 39. It should be understood that the foregoing example is merely for description, and is not intended to limit embodiments of this application.

Based on the foregoing network architecture, FIG. 6 is a schematic flowchart of another communication method according to an embodiment of this application. A function performed by a terminal device in this application may also be performed by a module (for example, a chip) in the terminal device, and a function performed by a network device in this application may also be performed by a module (for example, a chip) in the network device. The communication method may be used by the terminal device to determine uplink and downlink resources. As shown in FIG. 6, the communication method may include the following steps.

601: The network device sends first indication information to the terminal device.

Accordingly, the terminal device receives the first indication information from the network device.

Optionally, the network device sends second indication information to the terminal device. Accordingly, the terminal device may receive the second indication information from the network device.

The first indication information may indicate a first uplink frequency domain resource and/or a second uplink frequency domain resource on a carrier in a first time period. The first uplink frequency domain resource and/or the second uplink frequency domain resource may be used for uplink communication between the terminal device and the network device. A maximum frequency of the first uplink frequency domain resource may be lower than a minimum frequency of a first frequency domain resource, and a minimum frequency of the second uplink frequency domain resource may be higher than a maximum frequency of the first frequency domain resource. Alternatively, a sequence number of any frequency domain resource block in the first uplink frequency domain resource is less than a sequence number of any frequency domain resource block in the first frequency domain resource, and a sequence number of any frequency domain resource block in the second uplink resource is greater than the sequence number of any frequency domain resource block in the first frequency domain resource. The first uplink frequency domain resource and the second uplink frequency domain resource belong to a same band as the first frequency domain resource. It should be understood that the frequency domain resource block may be a resource block. A resource block (resource block) and a frequency domain resource block in a current NR protocol may have a same physical meaning. It should be understood that a band may be a predefined frequency range. In an NR system, the band is also referred to as an operating band, and may be an uplink operating band (uplink operating band), a downlink operating band (downlink operating band), or a defined continuous spectrum range other than an existing NR operating band.

In this embodiment of this application, a subcarrier or a resource block included in the carrier is determined in advance. A bandwidth of the carrier includes a continuous frequency range, and the frequency range may be determined in advance. For example, in an NR system, it is predetermined that a bandwidth of a carrier may be 5 MHz, 10 MHz, or the like.

The first uplink frequency domain resource and/or the second uplink frequency domain resource each are/is a frequency domain resource used by the network device for uplink communication. The first uplink frequency domain resource includes one or more resource blocks. The second uplink frequency domain resource includes one or more resource blocks.

Optionally, the first time period may include one or more slots. When the first time period includes one slot, the first indication information may indicate a frequency domain resource to be used by the terminal device for uplink communication at a current moment at which data needs to be transmitted. When the first time period includes a plurality of slots, the first indication information may indicate frequency domain resources to be used by the terminal device for uplink communication in all slots in the first time period.

Optionally, the first time period includes a downlink time period in an uplink-downlink slot format in a cell-level configuration. In other words, the first time period is not shorter than the downlink time period in the uplink-downlink slot format in the cell-level configuration. It may be understood that the first time period may be a time period longer than or equal to the downlink time period in the uplink-downlink slot format in the cell-level configuration, and may include an uplink time period and the downlink time period in the uplink-downlink slot format in the cell-level configuration. In this way, more flexible uplink resource configuration can be implemented, that is, a case that a fixed uplink frequency domain resource is reserved when no uplink signal is transmitted is avoided.

Optionally, that the first indication information may indicate the first uplink frequency domain resource and/or the second uplink frequency domain resource on the carrier in the first time period may include: The first indication information includes a plurality of pieces of indication information for indicating first uplink frequency domain resources and/or second uplink frequency domain resources on the carrier in time units. The time unit includes one or more slots, and the first time period includes a plurality of time units. In other words, a first uplink frequency domain resource and/or a second uplink frequency domain resource on the carrier in any time unit in the first time period may be separately indicated by the first indication information. In this way, frequency domain resource configuration on the carrier in the first time period is more flexible. For example, a carrier bandwidth of the terminal device is 10 MHz, and includes 50 frequency domain resource blocks numbered RB 0 to RB 49. The first frequency domain resource is RB 10 to RB 39. The first time period includes 20 slots numbered slot 0 to slot 19, and may be divided into four time units numbered time unit 0 to time unit 3. Time unit 0 to time unit 3 respectively include slot 0 to slot 4, slot 5 to slot 9, slot 10 to slot 14, and slot 15 to slot 19. The first indication information may separately indicate first uplink frequency domain resources and/or second uplink frequency domain resources corresponding to time unit 0 to time unit 3: first indicating that RB 0 to RB 9 are a first uplink frequency domain resource and RB 39 to RB 49 are a second uplink frequency domain resource on the carrier in time unit 0 (slot 0 to slot 4); indicating that RB 5 to RB 9 are a first uplink frequency domain resource and RB 39 to RB 49 are a second uplink frequency domain resource on the carrier in time unit 1 (slot 5 to slot 9); indicating that RB 0 to RB 9 are a first uplink frequency domain resource and RB 39 to RB 45 are a second uplink frequency domain resource on the carrier in time unit 2 (slot 10 to slot 14); and indicating that RB 0 to RB 9 are a first uplink frequency domain resource on the carrier in time unit 3 (slot 15 to slot 19). Specifically, specific frequency domain resource configuration patterns indicated by the first indication information may be determined by the terminal device according to a preconfigured policy. The preconfigured policy may be sent by the network device to the terminal device, or may be configured on the terminal device before delivery.

The second indication information indicates a second time period and a third time period, the first frequency domain resource is a downlink frequency domain resource in the second time period, and the first frequency domain resource is an uplink frequency domain resource in the third time period. The first frequency domain resource is predetermined. The first time period includes the second time period. To be specific, the second indication information indicates a downlink symbol and an uplink symbol. The first frequency domain resource is a downlink frequency domain resource in the second time period corresponding to the downlink symbol, and the first frequency domain resource is an uplink frequency domain resource in the third time period corresponding to the uplink symbol. The first frequency domain resource is predetermined.

Optionally, the second indication information indicates the uplink-downlink slot format in the cell-level configuration. To be specific, the second indication information indicates the uplink-downlink slot format corresponding to the first frequency domain resource. It may be understood that the first frequency domain resource may be configured in for uplink communication and downlink communication a TDD uplink-downlink slot format. The uplink-downlink slot format is used to determine a transmission direction of each symbol in a radio frame. Duration of one radio frame may be 10 ms. An uplink-downlink slot format configuration may be semi-static configuration information, and is signaled to the terminal device by using a type-1 system information block (SIB1). In NR, an uplink-downlink slot format may indicate that a symbol is used for downlink (downlink, DL) transmission, uplink (uplink, UL) transmission, flexible transmission, or the like. Specifically, a base station notifies the terminal device of the uplink-downlink slot format in the cell-level configuration by using cell-specific semi-static uplink-downlink common configuration information in RRC signaling. The cell-specific semi-static uplink-downlink common configuration information includes a reference subcarrier configuration parameter and a pattern (pattern). The pattern may be determined by using five parameters: a slot configuration cycle, a quantity of downlink transmission slots, a quantity of downlink transmission symbols, a quantity of uplink transmission slots, and a quantity of uplink transmission symbols. The quantity of downlink slots and the quantity of downlink symbols indicate a resource for downlink communication. The quantity of downlink slots represents a quantity of consecutive downlink-only slots at the beginning of a configured cycle, and the quantity of downlink symbols represents a quantity of consecutive downlink-only symbols after several downlink-only slots. The quantity of uplink slots and the quantity of uplink symbols indicate a resource for uplink communication. The quantity of uplink slots represents a quantity of consecutive uplink-only slots before the end of the configured cycle, and the quantity of uplink symbols represents a quantity of consecutive uplink-only symbols before several uplink-only slots.

For example, FIG. 7 is a schematic diagram of another frequency domain resource configuration according to an embodiment of this application. As shown in FIG. 7, RB 10 to RB 39 are a first frequency domain resource configuration. Specifically, the first frequency domain resource is configured for uplink communication and downlink communication in a TDD uplink-downlink slot format. On RB 10 to RB 39, the entire first time period may include a second time period, a third time period, and a fourth time period. The first frequency domain resource is a downlink frequency domain resource in the second time period, the first frequency domain resource is an uplink frequency domain resource in the third time period, and the first frequency domain resource is a flexible frequency domain resource in the fourth time period. On the flexible frequency domain resource, the terminal device may perform uplink communication or downlink communication.

Optionally, the first frequency domain resource includes one or more resource blocks. The resource block included in the first frequency domain resource may be preset by the network device, or may be sent by the network device to the terminal device by using other indication information.

Optionally, the second time period is a downlink time period in the uplink-downlink slot format in the cell-level configuration. To be specific, the second time period is a time period corresponding to a downlink symbol determined based on the uplink-downlink slot format in the cell-level configuration.

Optionally, the third time period is an uplink time period in the uplink-downlink slot format in the cell-level configuration. To be specific, the third time period is a time period corresponding to an uplink symbol determined based on the uplink-downlink slot format in the cell-level configuration.

Optionally, the first time period includes the second time period. In other words, the first time period is not shorter than the second time period. To be specific, the first time period is not shorter than a time period corresponding to a downlink symbol determined based on the uplink-downlink slot format in the cell-level configuration. The first time period may include at least the second time period. To be specific, the first time period includes the second time period, or the first time period includes the second time period and the third time period, or the first time period includes the second time period, the third time period, and another time period other than the second time period and the third time period.

The first indication information and the second indication information may be carried in cell-specific signaling, for example, cell-specific semi-static uplink-downlink common configuration information, and sent to the terminal device. Further, the first indication information and the second indication information may be transmitted by using a physical downlink shared channel (physical downlink shared channel, PDSCH). In this way, signaling overheads can be reduced.

It should be understood that the first indication information and the second indication information may be sent by the network device to the terminal device in any order. In other words, the network device may send the second indication information after sending the first indication information to the terminal device, or the network device may send the first indication information and the second indication information to the terminal device at the same time. This is not limited in this application.

Optionally, the first indication information and the second indication information indicate a frequency domain resource configuration pattern on the carrier in the first time period. The frequency domain resource configuration pattern determines a resource for uplink communication and a resource for downlink communication. Frequency domain resources included in the frequency domain resource configuration pattern are the first frequency domain resource and the first uplink frequency domain resource, or the first frequency domain resource and the second uplink frequency domain resource, or the first frequency domain resource, the first uplink frequency domain resource, and the second uplink frequency domain resource. The first uplink frequency domain resource is an uplink frequency domain resource in the first time period. The second uplink frequency domain resource is an uplink resource in the first time period. A maximum frequency of the first uplink frequency domain resource may be lower than a minimum frequency of the first frequency domain resource, and a minimum frequency of the second uplink frequency domain resource may be higher than a maximum frequency of the first frequency domain resource. Alternatively, a sequence number of any frequency domain resource block in the first uplink frequency domain resource is less than a sequence number of any frequency domain resource block in the first frequency domain resource, and a sequence number of any frequency domain resource block in the second uplink resource is greater than the sequence number of any frequency domain resource block in the first frequency domain resource. The first uplink frequency domain resource and the second uplink frequency domain resource belong to a same band as the first frequency domain resource. It should be understood that a band may be a predefined frequency range. The frequency domain resource configuration pattern determines the first time period, the second time period in which the first frequency domain resource is used for downlink communication, and the third time period in which the first frequency domain resource is used for uplink communication. In other words, the first frequency domain resource is a downlink frequency domain resource in the second time period, and is an uplink frequency domain resource in the third time period. The first time period includes the second time period.

For example, the frequency domain resource configuration pattern may be shown in FIG. 7. FIG. 7 shows a frequency domain resource configuration pattern according to an embodiment of this application. The first frequency domain resource is RB 10 to RB 39, the first frequency domain resource is determined in advance or notified by using other signaling, the first uplink frequency domain resource is RB 0 to RB 9, the second uplink frequency domain resource is RB 40 to RB 49, the first time period is slot 0 to slot 4, the second time period is slot 0 to slot 2, the third time period is slot 4, the second time period is included in the first time period, the third time period is included in the first time period, the first frequency domain resource is used for uplink communication in slot 0 to slot 2, and the first frequency domain resource is a downlink frequency domain resource in slot 4.

A maximum frequency of a frequency domain resource may be understood as a frequency corresponding to a subcarrier with a highest frequency in the frequency domain resource. A minimum frequency of a frequency domain resource may be understood as a frequency corresponding to a subcarrier with a lowest frequency in the frequency domain resource. Specifically, the maximum frequency of the first uplink frequency domain resource may be understood as a frequency corresponding to a subcarrier with a highest frequency in the first uplink frequency domain resource, the minimum frequency of the first frequency domain resource may be understood as a frequency corresponding to a subcarrier with a lowest frequency in the first frequency domain resource, the maximum frequency of the first frequency domain resource may be understood as a frequency corresponding to a subcarrier with a highest frequency in the first frequency domain resource, and the minimum frequency of the second uplink frequency domain resource may be understood as a frequency corresponding to a subcarrier with a lowest frequency in the second uplink frequency domain resource.

Optionally, there is a second frequency domain spacing between the first uplink frequency domain resource and the first frequency domain resource. There is a third frequency domain spacing between the first frequency domain resource and the second uplink frequency domain resource. In this way, adjacent-channel interference between uplink communication and downlink communication is reduced.

Optionally, the second frequency domain spacing is a frequency domain spacing between the first uplink frequency domain resource and the first frequency domain resource. The second frequency domain spacing is a quantity of resource blocks between a frequency domain resource block with a largest sequence number in the first uplink frequency domain resource and a frequency domain resource block with a smallest sequence number in the first frequency domain resource. The third frequency domain spacing is a quantity of resource blocks between a frequency domain resource block with a largest sequence number in the first frequency domain resource and a frequency domain resource block with a smallest sequence number in the second uplink frequency domain resource. It should be understood that the second frequency domain spacing and the third frequency domain spacing each may be 0. Alternatively, the second frequency domain spacing is a difference between a frequency of a subcarrier with a highest frequency in the first uplink frequency domain resource and a frequency of a subcarrier with a lowest frequency in the first frequency domain resource. The third frequency domain spacing is a frequency domain spacing between the first frequency domain resource and the second uplink frequency domain resource. Alternatively, the third frequency domain spacing is a difference between a frequency of a subcarrier with a highest frequency in the first frequency domain resource and a frequency of a subcarrier with a lowest frequency in the second uplink frequency domain resource.

Optionally, the first frequency domain spacing may be used to determine the second frequency domain spacing and/or the third frequency domain spacing. In other words, the first frequency domain spacing may include the second frequency domain spacing and/or the third frequency domain spacing. For example, when the first indication information indicates only the first uplink frequency domain resource/the second frequency domain resource, the first spacing may be used to determine the second frequency domain spacing/the third frequency domain spacing; or when the first frequency domain spacing is equal to the second frequency domain spacing, the first frequency domain spacing may be used to determine the second frequency domain spacing and the third frequency domain spacing.

Optionally, the first uplink frequency domain resource may include a frequency domain resource block with a lowest frequency or a smallest sequence number on the carrier, and the second uplink frequency domain resource may include a frequency domain resource block with a highest frequency or a largest sequence number on the carrier.

The terminal device may determine, by using the first indication information, the first uplink frequency domain resource and/or the second uplink frequency domain resource in the frequency domain resource configuration pattern, and determine, by using the predetermined first frequency domain resource and the second indication information, an uplink symbol and a downlink symbol that are corresponding to the first frequency domain resource in the frequency domain resource configuration pattern, to further determine the frequency domain resource configuration pattern. The uplink symbol corresponding to the first frequency domain resource in the frequency domain resource configuration pattern is determined based on the second time period indicated by the second indication information. The downlink symbol corresponding to the first frequency domain resource in the frequency domain resource configuration pattern is determined based on the third time period indicated by the second indication information.

Frequency domain resource configuration patterns may be classified into a first frequency domain resource configuration pattern and a second frequency domain resource configuration pattern.

For the first frequency domain resource configuration pattern, a quantity of frequency domain resource blocks in the first uplink frequency domain resource may be unequal to a quantity of frequency domain resource blocks in the second uplink frequency domain resource, and/or the second frequency domain spacing may be unequal to the third frequency domain spacing.

For the second frequency resource configuration pattern, details are as follows.

Optionally, a quantity of frequency domain resource blocks in the first uplink frequency domain resource is equal to a quantity of frequency domain resource blocks in the second uplink frequency domain resource.

Optionally, a difference between a maximum frequency of the first uplink frequency domain resource and a minimum frequency of the first frequency domain resource is equal to a difference between a maximum frequency of the first frequency domain resource and a minimum frequency of the second uplink frequency domain resource. In other words, the second frequency domain spacing is equal to the third frequency domain spacing. In other words, the first frequency domain spacing is equal to the second frequency domain spacing, and the first frequency domain spacing is equal to the third frequency domain spacing.

It may be understood that when the quantity of frequency domain resource blocks in the first uplink frequency domain resource is equal to the quantity of frequency domain resource blocks in the second uplink frequency domain resource, the first indication information may indicate only the quantity of frequency domain resource blocks in the first uplink frequency domain resource or the quantity of frequency domain resource blocks in the second uplink frequency domain resource, and the terminal device can determine the quantity of frequency domain resource blocks in the first uplink frequency domain resource and the quantity of frequency domain resource blocks in the second uplink frequency domain resource, so that signaling overheads can be reduced. Further, the second frequency domain spacing is equal to the third frequency domain spacing, that is, the second frequency domain resource configuration pattern is symmetric with respect to a center frequency of the first frequency domain resource. The center frequency of the first frequency domain resource is a median between a frequency of a subcarrier with a lowest frequency in the first frequency domain resource and a frequency of a subcarrier with a highest frequency in the first frequency domain resource.

The first indication information may directly indicate the first uplink frequency domain resource and/or the second uplink frequency domain resource. This includes: The first indication information separately indicates sequence numbers of resource blocks included in the first uplink frequency domain resource and/or the second uplink frequency domain resource on the carrier; or the first indication information separately indicates a resource block with a smallest sequence number and a resource block with a largest sequence number in the first uplink frequency domain resource and/or the second uplink frequency domain resource on the carrier; or the first indication information separately indicates a resource block with a smallest sequence number and a quantity of included resource blocks in the first uplink frequency domain resource and/or the second uplink frequency domain resource on the carrier; or the like.

Alternatively, the first indication information may indicate the first uplink frequency domain resource and/or the second uplink frequency domain resource by using an index value. The index value may be in a one-to-one correspondence with the first uplink frequency domain resource and/or second uplink frequency domain resource configuration. The index value indicated by the first indication information may correspond to one type of configuration of the first uplink frequency domain resource and/or the second uplink frequency domain resource.

Optionally, the first indication information indicates the quantity of resource blocks in the first uplink frequency domain resource and/or the second uplink frequency domain resource.

In a possible implementation, for the first frequency domain resource configuration pattern, it should be understood that the first indication information may further indicate a first uplink frequency domain resource and/or a second uplink frequency domain resource in another frequency domain resource configuration pattern below. The first indication information may include two fields. A first field may indicate a quantity of frequency domain resource blocks in the first uplink frequency domain resource, and a second field may indicate a quantity of frequency domain resource blocks in the second uplink frequency domain resource.

In another possible implementation, for example, for the second frequency domain resource configuration pattern, it should be understood that the first indication information may further indicate a first uplink frequency domain resource and/or a second uplink frequency domain resource in another frequency domain resource configuration pattern below. The first indication information may include one field, and the field may indicate a quantity of frequency domain resource blocks in the first uplink frequency domain resource or the second uplink frequency domain resource. Because the quantity of frequency domain resource blocks in the first uplink frequency domain resource is equal to the quantity of frequency domain resource blocks in the second uplink frequency domain resource, the field needs to indicate the quantity of frequency domain resource blocks in only the first uplink frequency domain resource or the second uplink frequency domain resource, and the terminal device can determine the quantity of frequency domain resource blocks in the first uplink frequency domain resource and the quantity of frequency domain resource blocks in the second uplink frequency domain resource based on the field. In this way, signaling overheads can be reduced.

Optionally, the first indication information may indicate a quantity of resource blocks in the first uplink frequency domain resource and/or the second uplink frequency domain resource, and a second frequency domain spacing and/or a third frequency domain spacing.

In a possible implementation, for example, for the first frequency domain resource configuration pattern, it should be understood that the first indication information may further indicate a first uplink frequency domain resource and/or a second uplink frequency domain resource in another frequency domain resource configuration pattern below. The first indication information may include four fields. A first field may indicate a quantity of frequency domain resource blocks in the first uplink frequency domain resource, a second field may indicate a second frequency domain spacing, a third field may indicate a third frequency domain spacing, and a fourth field may indicate a quantity of frequency domain resource blocks in the second uplink frequency domain resource.

In a possible implementation, for example, for the second frequency domain resource configuration pattern, it should be understood that the first indication information may further indicate a first uplink frequency domain resource and/or a second uplink frequency domain resource in another frequency domain resource configuration pattern below. The first indication information may include two fields: a first field and a second field. The first field may indicate a quantity of frequency domain resource blocks in the first uplink frequency domain resource or the second uplink frequency domain resource, and the second field may indicate a second frequency domain spacing or a third frequency domain spacing. Because the quantity of frequency domain resource blocks in the first uplink frequency domain resource is equal to the quantity of frequency domain resource blocks in the second uplink frequency domain resource, the first field needs to indicate the quantity of frequency domain resource blocks in only the first uplink frequency domain resource or the second uplink frequency domain resource, and the terminal device can determine the quantity of frequency domain resource blocks in the first uplink frequency domain resource and the quantity of frequency domain resource blocks in the second uplink frequency domain resource based on the first field. Because the second frequency domain spacing is equal to the third frequency domain spacing, the second field needs to indicate only the second frequency domain spacing or the third frequency domain spacing, and the terminal device can determine the second frequency domain spacing and the third frequency domain spacing based on the second field. In this way, signaling overheads can be reduced.

602: Determine the first uplink frequency domain resource and/or the second uplink frequency domain resource based on the first indication information.

The terminal device may determine the first uplink frequency domain resource and/or the second uplink frequency domain resource based on the first indication information.

Optionally, the terminal determines the second time period and the third time period based on the second indication information. The first frequency domain resource is a downlink frequency domain resource in the second time period, and the first frequency domain resource is an uplink frequency domain resource in the third time period. The first frequency domain resource is predetermined.

Optionally, the terminal device may determine the frequency domain resource configuration pattern based on the first indication information and the second indication information.

The terminal device may determine the first uplink frequency domain resource and/or the second uplink frequency domain resource based on the first indication information. Details are as follows.
(1) In a possible implementation, the terminal device may determine the first uplink frequency domain resource and/or the second uplink frequency domain resource based on the first indication information and the first frequency domain spacing. The first frequency domain spacing may be predetermined, or may be determined based on a bandwidth of the first frequency domain resource. Details are as follows.

When the first indication information received by the terminal device directly indicates the first uplink frequency domain resource and/or the second uplink frequency domain resource, for example, for the first frequency domain resource configuration pattern, an example is as follows.

**Table 15**

| First indication information | Sequence number of a frequency domain resource block used for first uplink communication | Sequence number of a block in the first frequency domain resource | Sequence number of a frequency domain resource block used for second uplink communication |
|---|---|---|---|
| {0, 0} | \ | 10 to 39 | \ |
| {1, 1} | 9 | 10 to 39 | 40 |
| {1, 1} | 8 | 10 to 39 | 41 |
| {1, 1} | 8 | 10 to 39 | 42 |
| {2, 3} | 7 to 8 | 10 to 39 | 42 to 44 |
| ... | ... | 10 to 39 | ... |

As shown in Table 15, it is assumed that the carrier bandwidth of the terminal device is 10 MHz, and includes 50 frequency domain resource blocks numbered RB 0 to RB 49. It is predetermined that RB 10 to RB 39 are the first frequency domain resource. The first indication information may include two fields. A first field may indicate a quantity of frequency domain resource blocks in the first uplink frequency domain resource, and a second field may indicate a quantity of frequency domain resource blocks in the second uplink frequency domain resource. When the first indication information sent by the network device to the terminal device is {0, 0}, it may indicate that the first indication information indicates, to the terminal device, that neither of additional first uplink frequency domain resource and second uplink frequency domain resource is required based on the first frequency domain resource. When the first indication information is {1, 1}, the second frequency domain spacing is preset to 0, and the third frequency domain spacing is preset to 0, it may indicate that the first indication information indicates, to the terminal device, that RB 9 is used for first uplink communication, and RB 40 is used for second uplink communication. When the first indication information is {1, 1}, the second frequency domain spacing is preset to 1, and the third frequency domain spacing is preset to 1, it may indicate that the first indication information indicates, to the terminal device, that RB 8 is used for first uplink communication, and RB 41 is used for second uplink communication. When the first indication information is {1, 1}, the second frequency domain spacing is preset to 1, and the third frequency domain spacing is preset to 2, it may indicate that the first indication information indicates, to the terminal device, that RB 8 is used for first uplink communication, and RB 42 is used for second uplink communication. When the first indication information is {2, 3}, the second frequency domain spacing is preset to 1, and the third frequency domain spacing is preset to 2, it may indicate that the first indication information indicates, to the terminal device, that RB 7 and RB 8 are used for first uplink communication, and RB 42 to RB 44 are used for second uplink communication. It should be understood that the foregoing example is merely for description, and is not intended to limit embodiments of this application.

When the first indication information received by the terminal device directly indicates the first uplink frequency domain resource and/or the second uplink frequency domain resource, for example, for the second frequency domain resource configuration pattern, an example is as follows.

**Table 16**

| First indication information | Sequence number of a frequency domain resource block used for first uplink communication | Sequence number of a block in the first frequency domain resource | Sequence number of a frequency domain resource block used for second uplink communication |
|---|---|---|---|
| {0} | \ | 10 to 39 | \ |
| {1} | 9 | 10 to 39 | 40 |
| {2} | 7 to 8 | 10 to 39 | 41 to 42 |
| ... | ... | 10 to 39 | ... |

As shown in Table 16, it is assumed that the carrier bandwidth of the terminal device is 10 MHz, and includes 50 frequency domain resource blocks numbered RB 0 to RB 49. It is predetermined that RB 10 to RB 39 are the first frequency domain resource. The first indication information may include one field, and the field may indicate a quantity of frequency domain resource blocks in the first uplink frequency domain resource or the second uplink frequency domain resource. When the first indication information sent by the network device to the terminal device is {0}, it may indicate that the first indication information indicates, to the terminal device, that neither of additional first uplink frequency domain resource and second uplink frequency domain resource is required based on the first frequency domain resource. When the first indication information is {1}, and the second frequency domain spacing or the third frequency domain spacing is preset to 0, it may indicate that the first indication information indicates, to the terminal device, that RB 9 is used for first uplink communication, and RB 40 is used for second uplink communication. When the first indication information is {2}, and the second frequency domain spacing or the third frequency domain spacing is preset to 1, it may indicate that the first indication information indicates, to the terminal device, that RB 7 and RB 8 are used for first uplink communication, and RB 41 and RB 42 are used for second uplink communication. It should be understood that the foregoing example is merely for description, and is not intended to limit embodiments of this application.

If the first indication information received by the terminal device is an index value, the terminal device may determine, based on the index value, the first uplink frequency domain resource and/or the second uplink frequency domain resource corresponding to the index value. The index value may be in a one-to-one correspondence with the first uplink frequency domain resource and/or second uplink frequency domain resource configuration, and the correspondence may be preset by the terminal device, or may be set by the network device and then sent to the terminal device. This is not limited in this application.

If the first indication information received by the terminal device is an index value, the terminal device may determine, on the premise of predetermining the first frequency domain resource, the first uplink frequency domain resource and/or the second uplink frequency domain resource on the carrier in the first time period based on the first uplink frequency domain resource and/or second uplink frequency domain resource configuration corresponding to the index value indicated by the first indication information.

If the first indication information received by the terminal device is an index value, for example, for the first frequency domain resource configuration pattern, an example is as follows.

**Table 17**

| First indication information | First uplink frequency domain resource and/or second uplink frequency domain resource configuration | Sequence number of a frequency domain resource block used for first uplink communication | Sequence number of a block in the first frequency domain resource | Sequence number of a frequency domain resource block used for second uplink communication |
|---|---|---|---|---|
| 0 | {0, 0} | \ | 10 to 39 | \ |
| 1 | {1, 1} | 9 | 10 to 39 | 40 |
| 1 | {1, 1} | 8 | 10 to 39 | 41 |
| 1 | {1, 1} | 8 | 10 to 39 | 42 |
| 2 | {2, 3} | 7 to 8 | 10 to 39 | 42 to 44 |
| ... | ... | ... | 10 to 39 | ... |

As shown in Table 17, it is assumed that the carrier bandwidth of the terminal device is 10 MHz, and includes 50 frequency domain resource blocks numbered RB 0 to RB 49. It is predetermined that RB 10 to RB 39 are the first frequency domain resource. When an index value indicated by the first indication information sent by the network device to the terminal device is 0, the terminal device may determine that a first uplink frequency domain resource and/or second uplink frequency domain resource configuration corresponding to the index value 0 is {0, 0}, and it may indicate that the first indication information indicates, to the terminal device, that neither of additional first uplink frequency domain resource and second uplink frequency domain resource is required based on the first frequency domain resource. When an index value indicated by the first indication information is 1, the terminal device may determine that a first uplink frequency domain resource and/or second uplink frequency domain resource configuration corresponding to the index value 1 is {1, 1}, and if the second frequency domain spacing is preset to 0 and the third frequency domain spacing is preset to 0, it may indicate that the first indication information indicates, to the terminal device, that RB 9 is used for first uplink communication, and RB 40 is used for second uplink communication; or if the second frequency domain spacing is preset to 1 and the third frequency domain spacing is preset to 1, it may indicate that the first indication information indicates, to the terminal device, that RB 8 is used for first uplink communication, and RB 41 is used for second uplink communication; or if the second frequency domain spacing is preset to 1 and the third frequency domain spacing is preset to 2, it may indicate that the first indication information indicates, to the terminal device, that RB 8 is used for first uplink communication, and RB 42 is used for second uplink communication. When an index value indicated by the first indication information is 2, the terminal device may determine that a first uplink frequency domain resource and/or second uplink frequency domain resource configuration corresponding to the index value 2 is {2, 3}, and if the second frequency domain spacing is preset to 1 and the third frequency domain spacing is preset to 2, it may indicate that the first indication information indicates, to the terminal device, that RB 7 and RB 8 are used for first uplink communication, and RB 42 to RB 44 are used for second uplink communication. It should be understood that the foregoing example is merely for description, and is not intended to limit embodiments of this application.

If the first indication information received by the terminal device is an index value, for example, for the second frequency domain resource configuration pattern, an example is as follows.

**Table 18**

| First indication information | First uplink frequency domain resource and/or second uplink frequency domain resource configuration | Sequence number of a frequency domain resource block used for first uplink communication | Sequence number of a block in the first frequency domain resource | Sequence number of a frequency domain resource block used for second uplink communication |
|---|---|---|---|---|
| 0 | {0} | \ | 10 to 39 | \ |
| 1 | {1} | 9 | 10 to 39 | 40 |
| 2 | {2} | 7 to 8 | 10 to 39 | 41 to 42 |
| ... | ... | ... | 10 to 39 | ... |

As shown in Table 18, it is assumed that the carrier bandwidth of the terminal device is 10 MHz, and includes 50 frequency domain resource blocks numbered RB 0 to RB 49. It is predetermined that RB 10 to RB 39 are the first frequency domain resource. When an index value indicated by the first indication information sent by the network device to the terminal device is 0, the terminal device may determine that a first uplink frequency domain resource and/or second uplink frequency domain resource configuration corresponding to the index value 0 is {0}, and it may indicate that the first indication information indicates, to the terminal device, that neither of additional first uplink frequency domain resource and second uplink frequency domain resource is required based on the first frequency domain resource. When an index value indicated by the first indication information is 1, the terminal device may determine that a first uplink frequency domain resource and/or second uplink frequency domain resource configuration corresponding to the index value 1 is {1}, and if the second frequency domain spacing or the third frequency domain spacing is preset to 0, it may indicate that the first indication information indicates, to the terminal device, that RB 9 is used for first uplink communication, and RB 40 is used for second uplink communication. When an index value indicated by the first indication information is 2, the terminal device may determine that a first uplink frequency domain resource and/or second uplink frequency domain resource configuration corresponding to the index value 2 is {2}, and if the second frequency domain spacing or the third frequency domain spacing is preset to 1, it may indicate that the first indication information indicates, to the terminal device, that RB 7 and RB 8 are used for first uplink communication, and RB 41 and RB 42 are used for second uplink communication. It should be understood that the foregoing example is merely for description, and is not intended to limit embodiments of this application.

(2) In another possible implementation, the terminal device may determine the first uplink frequency domain resource and/or the second uplink frequency domain resource based on the first indication information, the second frequency domain spacing, and/or the third frequency domain spacing. The second frequency domain spacing and/or the third frequency domain spacing are/is indicated by the first indication information. Details are as follows.

When the first indication information received by the terminal device directly indicates the first uplink frequency domain resource and/or the second uplink frequency domain resource, for the first frequency domain resource configuration pattern, an example is as follows.

**Table 19**

| First indication information | Sequence number of a frequency domain resource block used for first uplink communication | Sequence number of a block in the first frequency domain resource | Sequence number of a frequency domain resource block used for second uplink communication |
|---|---|---|---|
| {0, 0, 0, 0} | \ | 10 to 39 | \ |
| {4, 1, 1, 4} | 5 to 8 | 10 to 39 | 41 to 44 |
| {4, 0, 0, 4} | 6 to 9 | 10 to 39 | 40 to 43 |
| {2, 1, 1, 4} | 7 to 8 | 10 to 39 | 41 to 44 |
| {2, 1, 2, 4} | 7 to 8 | 10 to 39 | 43 to 45 |
| ... | ... | 10 to 39 | ... |

As shown in Table 19, it is assumed that the carrier bandwidth of the terminal device is 10 MHz, and includes 50 frequency domain resource blocks numbered RB 0 to RB 49. It is predetermined that RB 10 to RB 39 are the first frequency domain resource. The first indication information may include four fields. A first field may indicate a quantity of frequency domain resource blocks in the first uplink frequency domain resource, a second field may indicate a second frequency domain spacing, a third field may indicate a third frequency domain spacing, and a fourth field may indicate a quantity of frequency domain resource blocks in the second uplink frequency domain resource. When the first indication information sent by the network device to the terminal device is {0, 0, 0, 0}, it may indicate that the first indication information indicates, to the terminal device, that neither of additional first uplink frequency domain resource and second uplink frequency domain resource is required based on the first frequency domain resource. When the first indication information is {4, 1, 1, 4}, it may indicate that the first indication information indicates, to the terminal device, that RB 5 to RB 8 are used for first uplink communication, and RB 41 to RB 44 are used for second uplink communication. When the first indication information is {4, 0, 0, 4}, it may indicate that the first indication information indicates, to the terminal device, that RB 6 to RB 9 are used for first uplink communication, and RB 40 to RB 43 are used for second uplink communication. When the first indication information is {2, 1, 1, 4}, it may indicate that the first indication information indicates, to the terminal device, that RB 7 and RB 8 are used for first uplink communication, and RB 41 to RB 44 are used for second uplink communication. When the first indication information is {2, 1, 2, 4}, it may indicate that the first indication information indicates, to the terminal device, that RB 7 and RB 8 are used for first uplink communication, and RB 43 to RB 45 are used for second uplink communication. It should be understood that the foregoing example is merely for description, and is not intended to limit embodiments of this application.

When the first indication information received by the terminal device directly indicates the first uplink frequency domain resource and/or second uplink frequency domain resource configuration, for example, for the second frequency domain resource configuration pattern, an example is as follows.

**Table 20**

| First indication information | Sequence number of a frequency domain resource block used for first uplink communication | Sequence number of a block in the first frequency domain resource | Sequence number of a frequency domain resource block used for second uplink communication |
|---|---|---|---|
| {0, 0} | \ | 10 to 39 | \ |
| {4, 1} | 5 to 8 | 10 to 39 | 41 to 44 |
| {4, 0} | 6 to 9 | 10 to 39 | 40 to 43 |
| ... | ... | 10 to 39 | ... |

As shown in Table 20, it is assumed that the carrier bandwidth of the terminal device is 10 MHz, and includes 50 frequency domain resource blocks numbered RB 0 to RB 49. It is predetermined that RB 10 to RB 39 are the first frequency domain resource. The first indication information may include two fields: a first field and a second field. The first field may indicate a quantity of frequency domain resource blocks in the first uplink frequency domain resource or the second uplink frequency domain resource, and the second field may indicate a second frequency domain spacing or a third frequency domain spacing. When the first indication information sent by the network device to the terminal device is {0, 0}, it may indicate that the first indication information indicates, to the terminal device, that neither of additional first uplink frequency domain resource and second uplink frequency domain resource is required based on the first frequency domain resource. When the first indication information is {4, 1}, it may indicate that the first indication information indicates, to the terminal device, that RB 5 to RB 8 are used for first uplink communication, and RB 41 to RB 44 are used for second uplink communication. When the first indication information is {4, 0}, it may indicate that the first indication information indicates, to the terminal device, that RB 6 to RB 9 are used for first uplink communication, and RB 40 to RB 43 are used for second uplink communication. It should be understood that the foregoing example is merely for description, and is not intended to limit embodiments of this application.

If the first indication information received by the terminal device is an index value, the terminal device may determine, on the premise of predetermining the first frequency domain resource, the first uplink frequency domain resource and/or the second uplink frequency domain resource on the carrier in the first time period based on the first uplink frequency domain resource and/or second uplink frequency domain resource configuration corresponding to the index value indicated by the first indication information.

If the first indication information received by the terminal device is an index value, for example, for the first frequency domain resource configuration pattern, an example is as follows.

**Table 21**

| First indication information | First uplink frequency domain resource and/or second uplink frequency domain resource configuration | Sequence number of a frequency domain resource block used for first uplink communication | Sequence number of a block in the first frequency domain resource | Sequence number of a frequency domain resource block used for second uplink communication |
|---|---|---|---|---|
| 0 | {0, 0, 0, 0} | \ | 10 to 39 | \ |
| 1 | {4, 1, 1, 4} | 5 to 8 | 10 to 39 | 41 to 44 |
| 2 | {4, 0, 0, 4} | 6 to 9 | 10 to 39 | 40 to 43 |
| 3 | {2, 1, 1, 4} | 7 to 8 | 10 to 39 | 41 to 44 |
| 4 | {2, 1, 2, 4} | 7 to 8 | 10 to 39 | 43 to 45 |
| ... | ... | ... | 10 to 39 | ... |

As shown in Table 21, it is assumed that the carrier bandwidth of the terminal device is 10 MHz, and includes 50 frequency domain resource blocks numbered RB 0 to RB 49. It is predetermined that RB 10 to RB 39 are the first frequency domain resource. When an index value indicated by the first indication information sent by the network device to the terminal device is 0, the terminal device may determine that a first uplink frequency domain resource and/or second uplink frequency domain resource configuration corresponding to the index value 0 is {0, 0, 0, 0}, and it may indicate that the first indication information indicates, to the terminal device, that neither of additional first uplink frequency domain resource and second uplink frequency domain resource is required based on the first frequency domain resource. When an index value indicated by the first indication information is 1, the terminal device may determine that a first uplink frequency domain resource and/or second uplink frequency domain resource configuration corresponding to the index value 1 is {4, 1, 1, 4}, and it may indicate that the first indication information indicates, to the terminal device, that RB 5 to RB 8 are used for first uplink communication, and RB 41 to RB 44 are used for second uplink communication. When an index value indicated by the first indication information is 2, the terminal device may determine that a first uplink frequency domain resource and/or second uplink frequency domain resource configuration corresponding to the index value 2 is {4, 0, 0, 4}, and it may indicate that the first indication information indicates, to the terminal device, that RB 6 to RB 9 are used for first uplink communication, and RB 40 to RB 43 are used for second uplink communication. When an index value indicated by the first indication information is 3, the terminal device may determine that a first uplink frequency domain resource and/or second uplink frequency domain resource configuration corresponding to the index value 3 is {2, 1, 1, 4}, and it may indicate that the first indication information indicates, to the terminal device, that RB 7 and RB 8 are used for first uplink communication, and RB 41 to RB 44 are used for second uplink communication. When an index value indicated by the first indication information is 4, the terminal device may determine that a first uplink frequency domain resource and/or second uplink frequency domain resource configuration corresponding to the index value 4 is {2, 1, 2, 4}, and it may indicate that the first indication information indicates, to the terminal device, that RB 7 and RB 8 are used for first uplink communication, and RB 43 to RB 45 are used for second uplink communication. It should be understood that the foregoing example is merely for description, and is not intended to limit embodiments of this application.

If the first indication information received by the terminal device is an index value, for example, for the second frequency domain resource configuration pattern, an example is as follows.

**Table 22**

| First indication information | First uplink frequency domain resource and/or second uplink frequency domain resource configuration | Sequence number of a frequency domain resource block used for first uplink communication | Sequence number of a block in the first frequency domain resource | Sequence number of a frequency domain resource block used for second uplink communication |
|---|---|---|---|---|
| 0 | {0, 0} | \ | 10 to 39 | \ |
| 1 | {4, 1} | 5 to 8 | 10 to 39 | 41 to 44 |
| 2 | {4, 0} | 6 to 9 | 10 to 39 | 40 to 43 |
| ... | ... | ... | 10 to 39 | ... |

As shown in Table 22, it is assumed that the carrier bandwidth of the terminal device is 10 MHz, and includes 50 frequency domain resource blocks numbered RB 0 to RB 49. It is predetermined that RB 10 to RB 39 are the first frequency domain resource. When an index value indicated by the first indication information sent by the network device to the terminal device is 0, the terminal device may determine that a first uplink frequency domain resource and/or second uplink frequency domain resource configuration corresponding to the index value 0 is {0, 0}, and it may indicate that the first indication information indicates, to the terminal device, that neither of additional first uplink frequency domain resource and second uplink frequency domain resource is required based on the first frequency domain resource. When an index value indicated by the first indication information is 1, the terminal device may determine that a first uplink frequency domain resource and/or second uplink frequency domain resource configuration corresponding to the index value 1 is {4, 1}, and it may indicate that the first indication information indicates, to the terminal device, that RB 5 to RB 8 are used for first uplink communication, and RB 41 to RB 44 are used for second uplink communication. When an index value indicated by the first indication information is 2, the terminal device may determine that a first uplink frequency domain resource and/or second uplink frequency domain resource configuration corresponding to the index value 2 is {4, 0}, and it may indicate that the first indication information indicates, to the terminal device, that RB 6 to RB 9 are used for first uplink communication, and RB 40 to RB 43 are used for second uplink communication. It should be understood that the foregoing example is merely for description, and is not intended to limit embodiments of this application.

Optionally, the terminal device may determine the frequency domain resource configuration pattern based on the first indication information and the second indication information. An example is as follows.

Based on the examples described in Table 15 to Table 22, the terminal device may further determine the second time period and the third time period based on the second indication information. In the second time period, the first frequency domain resource RB 10 to RB 39 is a downlink frequency domain resource. In the third time period, the first frequency domain resource RB 10 to RB 39 is an uplink frequency domain resource. Further, the terminal device may determine the frequency domain resource configuration pattern based on the first indication information and the second indication information.

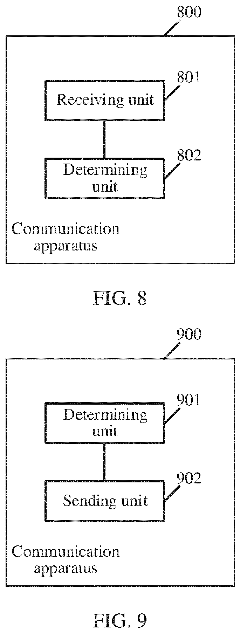

Based on the foregoing network architecture, FIG. 8 is a schematic diagram of a structure of a communication apparatus according to an embodiment of this application. The communication apparatus may be a terminal device, or may be a module (for example, a chip) in the terminal device. As shown in FIG. 8, the communication apparatus 800 includes at least a receiving unit 801 and a determining unit 802.

The receiving unit 801 is configured to receive first indication information from a network device, where the first indication information indicates a first uplink frequency domain resource, a second uplink frequency domain resource, and a first downlink frequency domain resource on a carrier in a first time period, and the first time period includes one or more slots. A frequency of the first uplink frequency domain resource is lower than a frequency of the first downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource.

The determining unit 802 is configured to determine the first uplink frequency domain resource, the second uplink frequency domain resource, and the first downlink frequency domain resource on the carrier based on the first indication information.

In an embodiment, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In an embodiment, a quantity of frequency domain resource blocks in the first uplink frequency domain resource is equal to a quantity of frequency domain resource blocks in the second uplink frequency domain resource.

In an embodiment, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In an embodiment, that the determining unit 802 determines the first uplink frequency domain resource, the second uplink frequency domain resource, and the first downlink frequency domain resource on the carrier based on the first indication information includes: determining the first uplink frequency domain resource and the second uplink frequency domain resource based on the first field, where a minimum frequency of the first uplink frequency domain resource is a minimum frequency of the carrier, and a maximum frequency of the second uplink frequency domain resource is a maximum frequency of the carrier; and determining the first downlink frequency domain resource based on the second field, where a center frequency of the first downlink frequency domain resource is a center frequency of the carrier.

In an embodiment, the first time period includes a downlink time period in an uplink-downlink slot format in a cell-level configuration.

In an embodiment, the first indication information is carried in cell-specific signaling.

For more detailed descriptions of the receiving unit 801 and the determining unit 802, directly refer to the related descriptions of the terminal device in the method embodiment shown in FIG. 4. Details are not described herein again.

Based on the foregoing network architecture, FIG. 9 is a schematic diagram of a structure of another communication apparatus according to an embodiment of this application. The communication apparatus may be a network device, or may be a module (for example, a chip) in the network device. As shown in FIG. 9, the communication apparatus 900 includes at least a determining unit 901 and a sending unit 902.

The determining unit 901 is configured to determine first indication information, where the first indication information indicates a first uplink frequency domain resource, a second uplink frequency domain resource, and a first downlink frequency domain resource on a carrier in a first time period. A frequency of the first uplink frequency domain resource is lower than a frequency of the first downlink frequency domain resource, and a frequency of the second uplink frequency domain resource is higher than the frequency of the first downlink frequency domain resource; or a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource.

The sending unit 902 is configured to send the first indication information to a terminal device.

In an embodiment, a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

In an embodiment, a quantity of frequency domain resource blocks in the first uplink frequency domain resource is equal to a quantity of frequency domain resource blocks in the second uplink frequency domain resource.

In an embodiment, the first indication information includes a first field and a second field, the first field indicates the quantity of frequency domain resource blocks in the first uplink frequency domain resource or the second uplink frequency domain resource, and the second field indicates a quantity of frequency domain resource blocks in the first downlink frequency domain resource.

In an embodiment, a minimum frequency of the first uplink frequency domain resource is a minimum frequency of the carrier, and a maximum frequency of the second uplink frequency domain resource is a maximum frequency of the carrier; and a center frequency of the first downlink frequency domain resource is a center frequency of the carrier.

In an embodiment, the first time period includes a downlink time period in an uplink-downlink slot format in a cell-level configuration.

In an embodiment, the first indication information is carried in cell-specific signaling.

For more detailed descriptions of the determining unit 901 and the sending unit 902, directly refer to the related descriptions of the network device in the method embodiment shown in FIG. 4. Details are not described herein again.

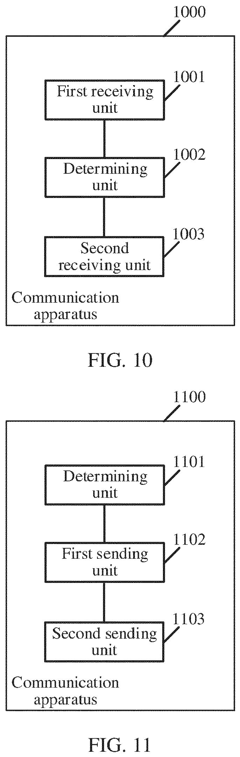

Based on the foregoing network architecture, FIG. 10 is a schematic diagram of a structure of another communication apparatus according to an embodiment of this application. The communication apparatus may be a terminal device, or may be a module (for example, a chip) in the terminal device. As shown in FIG. 10, the communication apparatus 1000 includes at least a first receiving unit 1001, a determining unit 1002, and a second receiving unit 1003.

The first receiving unit 1001 is configured to receive first indication information from a network device, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band.

The determining unit 1002 is configured to determine the first uplink frequency domain resource and/or the second uplink frequency domain resource based on the first indication information.

In an embodiment, the communication apparatus may further include:
the second receiving unit 1003, configured to receive second indication information from the network device, where the second indication information indicates a second time period and a third time period, the first frequency domain resource is a downlink frequency domain resource in the second time period, the first frequency domain resource is an uplink frequency domain resource in the third time period, the first time period includes the second time period, and the first frequency domain resource is predetermined.

In an embodiment, a difference between the maximum frequency of the first uplink frequency domain resource and the minimum frequency of the first frequency domain resource is equal to a difference between the maximum frequency of the first frequency domain resource and the minimum frequency of the second uplink frequency domain resource.

In an embodiment, a quantity of frequency domain resource blocks in the first uplink frequency domain resource is equal to a quantity of frequency domain resource blocks in the second uplink frequency domain resource.

In an embodiment, the first indication information indicates the quantity of resource blocks in the first uplink frequency domain resource and/or the second uplink frequency domain resource.

In an embodiment, that the determining unit 1002 determines the first uplink frequency domain resource and/or the second uplink frequency domain resource based on the first indication information includes: determining the first uplink frequency domain resource and/or the second uplink frequency domain resource based on the first indication information and a first frequency domain spacing, where the first frequency domain spacing is predetermined or is determined based on a bandwidth of the first frequency domain resource.

In an embodiment, the first indication information and the second indication information are carried in cell-specific signaling.

For more detailed descriptions of the first receiving unit 1001, the determining unit 1002, and the second receiving unit 1003, directly refer to the related descriptions of the terminal device in the method embodiment shown in FIG. 6. Details are not described herein again.

Based on the foregoing network architecture, FIG. 11 is a schematic diagram of a structure of another communication apparatus according to an embodiment of this application. The communication apparatus may be a network device, or may be a module (for example, a chip) in the network device. As shown in FIG. 11, the communication apparatus 1100 includes at least a determining unit 1101, a first sending unit 1102, and a second sending unit 1103.

The determining unit 1101 is configured to determine first indication information, where the first indication information indicates a first uplink frequency domain resource and/or a second uplink frequency domain resource on a carrier in a first time period, a maximum frequency of the first uplink frequency domain resource is lower than a minimum frequency of a first frequency domain resource, a minimum frequency of the second uplink frequency domain resource is higher than a maximum frequency of the first frequency domain resource, and the first uplink frequency domain resource and/or the second uplink frequency domain resource and the first frequency domain resource belong to a same band.

The first sending unit 1102 is configured to send the first indication information to a terminal device.

In an embodiment, the communication apparatus may further include:
the second sending unit 1103, configured to send second indication information to the terminal device, where the second indication information indicates the first frequency domain resource, the first frequency domain resource is a downlink frequency domain resource in a second time period and is an uplink frequency domain resource in a third time period, and the first time period includes the second time period.

In an embodiment, a difference between the maximum frequency of the first uplink frequency domain resource and the minimum frequency of the first frequency domain resource is equal to a difference between the maximum frequency of the first frequency domain resource and the minimum frequency of the second uplink frequency domain resource.

In an embodiment, a quantity of frequency domain resource blocks in the first uplink frequency domain resource is equal to a quantity of frequency domain resource blocks in the second uplink frequency domain resource.

In an embodiment, the first indication information indicates the quantity of resource blocks in the first uplink frequency domain resource and/or the second uplink frequency domain resource.

In an embodiment, the first indication information and the second indication information are carried in cell-specific signaling.

For more detailed descriptions of the determining unit 1101, the first sending unit 1102, and the second sending unit 1103, directly refer to the related descriptions of the network device in the method embodiment shown in FIG. 6. Details are not described herein again.

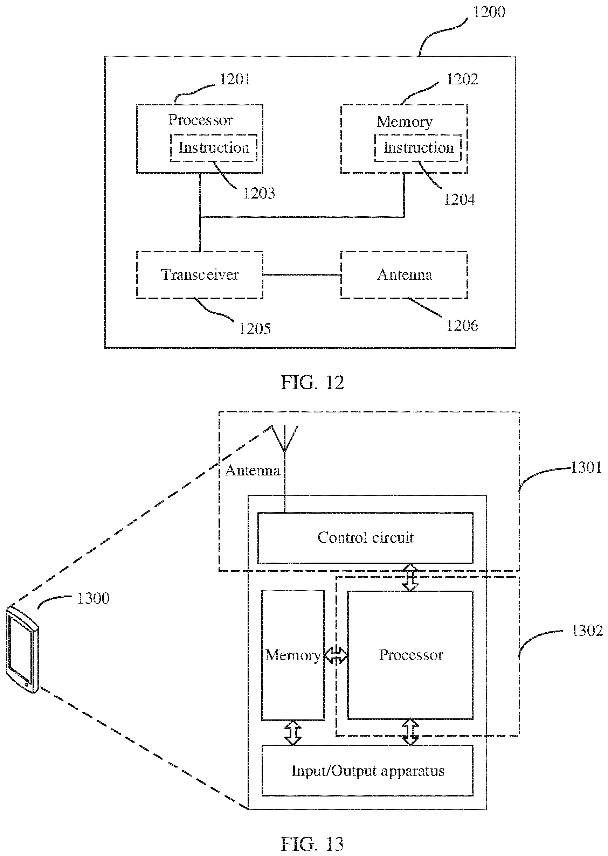

Based on the foregoing network architecture, FIG. 12 is a schematic diagram of a structure of another communication apparatus according to an embodiment of this application. As shown in FIG. 12, the apparatus 1200 may include one or more processors 1201. The processor 1201 may also be referred to as a processing unit, and may implement a specific control function. The processor 1201 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1201 may alternatively store instructions and/or data 1203, and the instructions and/or data 1203 may be run by the processor, to enable the apparatus 1200 to perform the methods described in the foregoing method embodiments.

In another optional design, the processor 1201 may include a transceiver unit configured to implement receiving and sending functions. For example, the transceiver unit may be a transceiver circuit, an interface, an interface circuit, or a communication interface. The transceiver circuit, the interface, or the interface circuit configured to implement receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In another possible design, the apparatus 1200 may include a circuit. The circuit may implement the sending, receiving, or communication function in the foregoing method embodiments.

Optionally, the apparatus 1200 may include one or more memories 1202. The memory may store instructions 1204. The instructions may be run on the processor, so that the apparatus 1200 performs the methods in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1200 may further include a transceiver 1205 and/or an antenna 1206. The processor 1201 may be referred to as a processing unit, and controls the apparatus 1200. The transceiver 1205 may be referred to as a transceiver unit, a transceiver machine, a transceiver circuit, a transceiver apparatus, a transceiver module, or the like, and is configured to implement sending and receiving functions.

Optionally, the apparatus 1200 in this embodiment of this application may be configured to perform the methods described in FIG. 4 and FIG. 6 in embodiments of this application.

In an embodiment, the communication apparatus 1200 may be a terminal device, or may be a module (for example, a chip) in the terminal device. When computer program instructions stored in the memory 1202 are executed, the processor 1201 is configured to control the determining unit 802 to perform an operation performed in the foregoing embodiment, the transceiver 1205 is configured to perform an operation performed by the receiving unit 801 in the foregoing embodiment, and the transceiver 1205 is further configured to send information to another communication apparatus other than the communication apparatus. The terminal device or the module in the terminal device may be further configured to perform various methods performed by the terminal device in the method embodiment in FIG. 4. Details are not described again.

In an embodiment, the communication apparatus 1200 may be a network device, or may be a module (for example, a chip) in the network device. When computer program instructions stored in the memory 1202 are executed, the processor 1201 is configured to control the determining unit 901 to perform an operation performed in the foregoing embodiment, the transceiver 1205 is configured to receive information from another communication apparatus other than the communication apparatus, and the transceiver 1205 is further configured to perform an operation performed by the sending unit 902 in the foregoing embodiment. The network device or the module in the network device may be further configured to perform various methods performed by the network device in the method embodiment in FIG. 4. Details are not described again.

In an embodiment, the communication apparatus 1200 may be a terminal device, or may be a module (for example, a chip) in the terminal device. When computer program instructions stored in the memory 1202 are executed, the processor 1201 is configured to control the determining unit 1002 to perform an operation performed in the foregoing embodiment, the transceiver 1205 is configured to perform operations performed by the first receiving unit 1001 and the second receiving unit 1003 in the foregoing embodiment, and the transceiver 1205 is further configured to send information to another communication apparatus other than the communication apparatus. The terminal device or the module in the terminal device may be further configured to perform various methods performed by the terminal device in the method embodiment in FIG. 6. Details are not described again.

In an embodiment, the communication apparatus 1200 may be a network device, or may be a module (for example, a chip) in the network device. When computer program instructions stored in the memory 1202 are executed, the processor 1201 is configured to control the determining unit 1101 to perform an operation performed in the foregoing embodiment, the transceiver 1205 is configured to receive information from another communication apparatus other than the communication apparatus, and the transceiver 1205 is further configured to perform operations performed by the first sending unit 1102 and the second sending unit 1103 in the foregoing embodiment. The network device or the module in the network device may be further configured to perform various methods performed by the network device in the method embodiment in FIG. 6. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, a range of the apparatus described in this application is not limited thereto, and a structure of the apparatus may not be limited to FIG. 12. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

Based on the foregoing network architecture, FIG. 13 is a schematic diagram of a structure of a terminal according to an embodiment of this application. For ease of description, FIG. 13 shows only main components of the terminal device. As shown in FIG. 13, the terminal device 1300 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives a radio frequency signal by using the antenna, further converts the radio frequency signal into a baseband signal, and outputs the baseband signal to the processor. The processor converts the baseband signal into data, and processes the data.

For ease of description, FIG. 13 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver machine, a transceiver, a transceiver apparatus, or the like. Optionally, a component that is in the transceiver unit 1301 and that is configured to implement a receiving function may be considered as a receiving unit, and a component that is in the transceiver unit 1301 and that is configured to implement a sending function may be considered as a sending unit. In other words, the transceiver unit 1301 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an embodiment, the processing unit 1302 is configured to perform operations performed by the determining unit 802 and the determining unit 1002 in the foregoing embodiments, and the transceiver unit 1301 is configured to perform operations performed by the receiving unit 801, the first receiving unit 1001, and the second receiving unit 1003 in the foregoing embodiments. The terminal 1300 may be further configured to perform various methods performed by the terminal in the method embodiments in FIG. 4 and FIG. 6, and details are not described again.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When the foregoing modules in the device are implemented in a form of a software functional unit and sold or used as an independent product, the modules may be stored in the computer-readable storage medium.

An embodiment of this application further discloses a communication system. The communication system includes a terminal device and a network device. For specific descriptions, refer to the communication methods shown in FIG. 4 and FIG. 6.

It may be understood that the memory mentioned in embodiments of this application may be a volatile memory or a nonvolatile memory, or may include a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, with reference to the examples described in embodiments provided in this specification, units and algorithm steps can be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The steps of the method in embodiments of this application may be adjusted in sequence, combined, or deleted based on an actual requirement.

The modules/units in the apparatus in embodiments of this application may be combined, divided, and deleted based on an actual requirement.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the scope of the technical solutions in embodiments of this application.

## Claims

1. A communication method, comprising:
receiving first indication information from a network device, wherein the first indication information indicates a first uplink frequency domain resource, a second uplink frequency domain resource, and a first downlink frequency domain resource on a carrier in a first time period, and the first time period comprises one or more slots, wherein
a frequency of the first uplink frequency domain resource is lower than a frequency of the first downlink frequency domain resource, and a frequency of the second uplink frequency domain resource is higher than the frequency of the first downlink frequency domain resource; or
a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
determining the first uplink frequency domain resource, the second uplink frequency domain resource, and the first downlink frequency domain resource on the carrier based on the first indication information.

2. The method according to claim 1, wherein
a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

3. The method according to claim 1 or 2, wherein a quantity of frequency domain resource blocks in the first uplink frequency domain resource is equal to a quantity of frequency domain resource blocks in the second uplink frequency domain resource.

4. The method according to claim 3, wherein
the first indication information comprises a first field and a second field, the first field indicates the quantity of frequency domain resource blocks in the first uplink frequency domain resource or the second uplink frequency domain resource, and the second field indicates a quantity of frequency domain resource blocks in the first downlink frequency domain.

5. The method according to claim 4, wherein the determining the first uplink frequency domain resource, the second uplink frequency domain resource, and the first downlink frequency domain resource on the carrier based on the first indication information comprises:
determining the first uplink frequency domain resource and the second uplink frequency domain resource based on the first field, wherein a minimum frequency of the first uplink frequency domain resource is a minimum frequency of the carrier, and a maximum frequency of the second uplink frequency domain resource is a maximum frequency of the carrier; and
determining the first downlink frequency domain resource based on the second field, wherein a center frequency of the first downlink frequency domain resource is a center frequency of the carrier.

6. The method according to any one of claims 1 to 5, wherein
the first time period comprises a downlink time period in an uplink-downlink slot format in a cell-level configuration.

7. The method according to any one of claims 1 to 6, wherein the first indication information is carried in cell-specific signaling.

8. A communication method, comprising:
determining first indication information, wherein the first indication information indicates a first uplink frequency domain resource, a second uplink frequency domain resource, and a first downlink frequency domain resource on a carrier in a first time period, wherein
a frequency of the first uplink frequency domain resource is lower than a frequency of the downlink frequency domain resource, and a frequency of the second uplink frequency domain resource is higher than the frequency of the downlink frequency domain resource; or
a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
sending the first indication information to a terminal device.

9. The method according to claim 8, wherein
a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

10. The method according to claim 8 or 9, wherein a quantity of frequency domain resource blocks in the first uplink frequency domain resource is equal to a quantity of frequency domain resource blocks in the second uplink frequency domain resource.

11. The method according to claim 10, wherein
the first indication information comprises a first field and a second field, the first field indicates the quantity of frequency domain resource blocks in the first uplink frequency domain resource or the second uplink frequency domain resource, and the second field indicates a quantity of frequency domain resource blocks in the first downlink frequency domain.

12. The method according to claim 11, wherein a minimum frequency of the first uplink frequency domain resource is a minimum frequency of the carrier, and a maximum frequency of the second uplink frequency domain resource is a maximum frequency of the carrier; and
a center frequency of the first downlink frequency domain resource is a center frequency of the carrier.

13. The method according to any one of claims 8 to 12, wherein
the first time period comprises a downlink time period in an uplink-downlink slot format in a cell-level configuration.

14. The method according to any one of claims 8 to 13, wherein the first indication information is carried in cell-specific signaling.

15. A communication apparatus, comprising:
a receiving unit, configured to receive first indication information from a network device, wherein the first indication information indicates a first uplink frequency domain resource, a second uplink frequency domain resource, and a first downlink frequency domain resource on a carrier in a first time period, and the first time period comprises one or more slots, wherein
a frequency of the first uplink frequency domain resource is lower than a frequency of the first downlink frequency domain resource, and a frequency of the second uplink frequency domain resource is higher than the frequency of the first downlink frequency domain resource; or
a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
a determining unit, configured to determine the first uplink frequency domain resource, the second uplink frequency domain resource, and the first downlink frequency domain resource on the carrier based on the first indication information.

16. The apparatus according to claim 15, wherein
a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

17. The apparatus according to claim 15 or 16, wherein a quantity of frequency domain resource blocks in the first uplink frequency domain resource is equal to a quantity of frequency domain resource blocks in the second uplink frequency domain resource.

18. The apparatus according to claim 17, wherein
the first indication information comprises a first field and a second field, the first field indicates the quantity of frequency domain resource blocks in the first uplink frequency domain resource or the second uplink frequency domain resource, and the second field indicates a quantity of frequency domain resource blocks in the first downlink frequency domain.

19. The apparatus according to claim 18, wherein that the determining unit determines the first uplink frequency domain resource, the second uplink frequency domain resource, and the first downlink frequency domain resource on the carrier based on the first indication information comprises:
determining the first uplink frequency domain resource and the second uplink frequency domain resource based on the first field, wherein a minimum frequency of the first uplink frequency domain resource is a minimum frequency of the carrier, and a maximum frequency of the second uplink frequency domain resource is a maximum frequency of the carrier; and
determining the first downlink frequency domain resource based on the second field, wherein a center frequency of the first downlink frequency domain resource is a center frequency of the carrier.

20. The apparatus according to any one of claims 15 to 19, wherein
the first time period comprises a downlink time period in an uplink-downlink slot format in a cell-level configuration.

21. The apparatus according to any one of claims 15 to 20, wherein the first indication information is carried in cell-specific signaling.

22. A communication apparatus, comprising:
a determining unit, configured to determine first indication information, wherein the first indication information indicates a first uplink frequency domain resource, a second uplink frequency domain resource, and a first downlink frequency domain resource on a carrier in a first time period, wherein
a frequency of the first uplink frequency domain resource is lower than a frequency of the downlink frequency domain resource, and a frequency of the second uplink frequency domain resource is higher than the frequency of the downlink frequency domain resource; or
a sequence number of any frequency domain resource block in the first uplink frequency domain resource is less than a sequence number of any frequency domain resource block in the first downlink frequency domain resource, and a sequence number of any frequency domain resource block in the second uplink resource is greater than the sequence number of any frequency domain resource block in the downlink frequency domain resource; and
a sending unit, configured to send the first indication information to a terminal device.

23. The apparatus according to claim 22, wherein
a difference between a maximum frequency of the first uplink frequency domain resource and a minimum frequency of the first downlink frequency domain resource is equal to a difference between a maximum frequency of the first downlink frequency domain resource and a minimum frequency of the second uplink frequency domain resource.

24. The apparatus according to claim 22 or 23, wherein a quantity of frequency domain resource blocks in the first uplink frequency domain resource is equal to a quantity of frequency domain resource blocks in the second uplink frequency domain resource.

25. The apparatus according to claim 24, wherein
the first indication information comprises a first field and a second field, the first field indicates the quantity of frequency domain resource blocks in the first uplink frequency domain resource or the second uplink frequency domain resource, and the second field indicates a quantity of frequency domain resource blocks in the first downlink frequency domain.

26. The apparatus according to claim 25, wherein a minimum frequency of the first uplink frequency domain resource is a minimum frequency of the carrier, and a maximum frequency of the second uplink frequency domain resource is a maximum frequency of the carrier; and
a center frequency of the first downlink frequency domain resource is a center frequency of the carrier.

27. The apparatus according to any one of claims 22 to 26, wherein
the first time period comprises a downlink time period in an uplink-downlink slot format in a cell-level configuration.

28. The apparatus according to any one of claims 22 to 27, wherein the first indication information is carried in cell-specific signaling.

29. A communication apparatus, comprising a processor, a memory, an input interface, and an output interface, wherein the input interface is configured to receive information from another communication apparatus other than the communication apparatus, the output interface is configured to output information to another communication apparatus other than the communication apparatus, and the processor invokes a computer program stored in the memory to perform:
the method according to any one of claims 1 to 7; or
the method according to any one of claims 8 to 14.

30. A computer-readable storage medium, wherein the computer-readable storage medium stores a computer program or computer instructions, and when the computer program or the computer instructions is/are run,
the method according to any one of claims 1 to 7 is performed; or
the method according to any one of claims 8 to 14 is performed.

31. A chip system, wherein the chip system comprises at least one processor, a memory, and an interface circuit, the memory, the interface circuit, and the at least one processor are connected to each other by using a line, the at least one memory stores instructions, and when the instructions are executed by the processor, the chip system is enabled to:
perform the method according to any one of claims 1 to 7; or
perform the method according to any one of claims 8 to 14.

32. A communication system, comprising the apparatus according to claim 29.
